# EUROPÄISCHE PATENTANMELDUNG

(11) **EP 4 559 981 A1**
(43) Veröffentlichungstag der Anmeldung: **28.05.2025**
(21) Anmeldenummer: 23212278.8
(22) Anmeldetag: 27.11.2023
(51) Int. Cl.: C09D 5/00

(54) **ALUMINIUMLEGIERUNGSBAND FÜR VERPACKUNGSBEHÄLTNISSE**

(71) Anmelder: Speira GmbH, 41515 Grevenbroich (DE)
(72) Erfinder: BAKIREL, Ishak, 50859 Köln (DE); SAKA, Atila, 41515 Grevenbroich (DE); ANDRAE, Karin, 41069 Mönchengladbach (DE); BIELICKE, Manja, 40591 Düsseldorf (DE)
(74) Vertreter: Cohausz & Florack

(57) **Zusammenfassung**

Die vorliegende Erfindung betrifft unter anderem ein Aluminiumlegierungsband zur Herstellung eines Verpackungsbehältnisses oder eines Teils eines Verpackungsbehältnisses, wobei das Aluminiumlegierungsband eine Aluminiumlegierung des Typs AA3xxx oder AA5xxx aufweist. Die Aufgabe, ein Aluminiumlegierungsband aus einer Aluminiumlegierung des Typs AA3xxx oder AA5xxx zur Herstellung eines Verpackungsbehältnisses oder eines Teils eines Verpackungsbehältnisses anzugeben, mit welchem eine hohe chemische Beständigkeit erreicht werden kann, ohne dass hierfür gesundheitsschädlich wirkende Stoffe eingesetzt werden müssen, wird dadurch gelöst, dass das Aluminiumlegierungsband auf einer Seite oder auf beiden Seiten eine Beschichtung aufweist, welche Polyolefin enthält, wobei die Beschichtung bei Durchführung des beschleunigten zyklischen elektrochemischen Verfahrens gemäß EN ISO 17463 nach sechs Zyklen eine Impedanz von mindestens 40 kΩ bei einer Frequenz von 0,1 Hz aufweist, wobei das beschleunigte zyklische elektrochemische Verfahren in einer Versuchslösung mit einem pH-Wert von 12 durchgeführt wird.

## Beschreibung

Die vorliegende Erfindung betrifft ein Aluminiumlegierungsband zur Herstellung eines Verpackungsbehältnisses oder eines Teils eines Verpackungsbehältnisses, wobei das Aluminiumlegierungsband eine Aluminiumlegierung des Typs AA3xxx oder AA5xxx aufweist. Daneben betrifft die Erfindung ein Verfahren zur Herstellung eines Aluminiumlegierungsbands, wobei das Verfahren umfasst: Gießen eines Walzbarrens oder eines Gießbands aus einer Aluminiumlegierung des Typs AA3xxx oder AA5xxx; Homogenisieren des Walzbarrens oder des Gießbands; Warmwalzen des Walzbarrens oder des Gießbands zu einem Warmband; und Kaltwalzen des Warmbands an Enddicke mit mindestens einer Zwischenglühung oder ohne Zwischenglühung. Schließlich betrifft die Erfindung eine Verwendung eines Aluminiumlegierungsbands, ein Teil eines Verpackungsbehältnisses sowie ein Verpackungsbehältnis.

Bei der Verpackung von Kosmetikprodukten und Körperpflegemitteln wie beispielsweise Deodorants, Haarsprays, Schaumfestiger, Haartönungs-Schaum, Rasierschaum, Duschschaum (Shower Mousse), Sonnenschutzmittel oder Selbstbräuner, um nur einige zu nennen, kommen oft Verpackungsbehältnisse aus Aluminium oder Aluminiumlegierungen zum Einsatz. Aluminium eignet sich in diesem Zusammenhang grundsätzlich für eine Vielzahl unterschiedlicher Verpackungsanwendungen, ist jedoch vor allem für die Verpackung sogenannter Aerosol-Produkte und Schaum-Produkte vorteilhaft, welche bei der Anwendung fein zerstäubt oder aufgeschäumt werden. Dies ist dadurch begründet, dass für das Erzeugen des Aerosols beziehungsweise Schaums typischerweise ein Treibmittel wie zum Beispiel Dimethylether, Kohlendioxid, Propan, Butan oder Stickstoff, um nur einige zu nennen, verwendet wird. Das Treibmittel erzeugt gegenüber der äußeren Umgebung einen Überdruck in dem Verpackungsbehältnis, welches daher eine bestimmte Innendruckstabilität aufweisen muss. Aufgrund der mechanischen Eigenschaften des Aluminiums, insbesondere aufgrund der vergleichsweise hohen Festigkeit, sind Verpackungsbehältnisse aus Aluminium oder Aluminiumlegierungen dazu in der Lage, diese Innendruckstabilität auf sichere Weise bereitzustellen.

In diesem Zusammenhang sind als Verpackungsbehältnisse insbesondere sogenannte Monoblockdosen zu nennen. Diese umfassen für gewöhnlich einen Dosenkörper sowie einen Ventilteller. Der Dosenkörper ist insbesondere einteilig ausgebildet und dient vorwiegend der Aufnahme des Füllguts. Hierzu weist der Dosenkörper beispielsweise eine zylindrische Grundform auf und ist zu einer Seite hin geöffnet, die einer Deckfläche des Zylinders entspricht. Der Ventilteller weist beispielsweise eine runde Grundform auf und ist mit einer Ventilöffnung versehen, in der sich ein Ventil befindet. Der Zweck des Ventiltellers besteht einerseits darin, die offene Seite des Dosenkörpers luftdicht und druckstabil zu verschließen. Hierzu ist der Ventilteller beispielsweise über eine Bördelung und/oder über eine Klebeverbindung mit dem Dosenkörper verbunden. Andererseits kann das Füllgut bei Betätigung des Ventils durch die Ventilöffnung des Ventiltellers hindurch nach außen entweichen. Neben dem Dosenkörper und dem Ventilteller kann eine Monoblockdose auch weitere Elemente aufweisen. Beispielsweise kann eine Ventilkappe zum leichteren Betätigen des Ventils oder ein auf den Ventilteller aufsetzbarer Verschlussdeckel, welcher das am Ventilteller freiliegende Ventil vor äußeren Einflüssen schützt, vorgesehen sein. Die weiteren Elemente sind jedoch nicht Teil des Verpackungsbehältnisses im engeren Sinne und sie sind oft nicht aus Aluminium oder einer Aluminiumlegierung, sondern beispielsweise aus Kunststoff hergestellt.

Zur Herstellung von Verpackungsbehältnissen aus Aluminium oder Aluminiumlegierungen sind insbesondere Aluminiumlegierungen der Typen AA3xxx oder AA5xxx geeignet. Legierungen des Typs AA5xxx weisen aufgrund ihres höheren Magnesiumanteils verbesserte mechanische Eigenschaften auf, was zur Bereitstellung der Innendruckstabilität des Verpackungsbehältnisses vorteilhaft ist. Bei Monoblockdosen ist dies in besonderem Maße für den Ventilteller relevant, bei dem ein unerwünschtes Ausbeulen leichter verhindert werden kann, wenn Aluminiumlegierungen des Typs AA5xxx mit höherer Festigkeit verwendet werden. Hingegen weisen Aluminiumlegierungen des Typs AA3xxx bessere Umformeigenschaften auf, was bei der Herstellung von Verpackungsbehältnissen aufgrund der hierfür notwendigen Umformprozesse von Vorteil ist. Bei Monoblockdosen gilt dies insbesondere für den Dosenkörper, der beispielsweise durch Tiefziehen hergestellt wird. Gleichzeitig sind die mechanischen Anforderungen für den Dosenkörper etwas weniger kritisch, sodass hier insbesondere Aluminiumlegierungen des Typs AA3xxx vorteilhaft eingesetzt werden können.

Eine wichtige Anforderung an das Material eines Verpackungsbehältnisses, insbesondere bei Kosmetikprodukten und Körperpflegemitteln, ist die chemische Beständigkeit gegenüber dem Füllgut. Speziell in Kosmetikprodukten und Körperpflegemitteln sind oft chemische Stoffe enthalten, welche mit Aluminium reagieren. Dies kann zu einer unerwünschten Zersetzung des Verpackungsbehältnisses führen, sodass die Innendruckstabilität nicht mehr gewährleistet werden kann und die Gefahr eines Berstens des unter Druck stehenden Behältnisses besteht. Als Stoffe, welche mit Aluminium reagieren, können beispielhaft Dimethylether, Propan, Butan, Parfüme, Salze, Öle, Ethanol, Chlorid, Hydroxycarbonsäuren, Ammoniak, aber auch Wasser genannt werden. In diesem Zusammenhang ist zu berücksichtigen, dass die typische Nutzungsdauer von Kosmetikprodukten und Körperpflegemitteln auch mehrere Monate bis einige Jahre betragen kann. Das Verpackungsbehältnis muss dabei über die gesamte Nutzungsdauer eine ausreichende chemische Beständigkeit aufweisen, um die Innendruckstabilität zu gewährleisten. Zur Verbesserung der chemischen Beständigkeit werden Verpackungsbehältnisse aus Aluminium oder Aluminiumlegierungen daher, insbesondere auf der Innenseite der Behältnisse, mit einer Beschichtung versehen, welche das Aluminium vor dem Kontakt mit dem Füllgut schützt. Vor allem bei chemisch aggressiven Füllgütern sind solche Beschichtungen essentiell für die Sicherheit des Benutzers. Typische aggressive Füllgüter sind in diesem Zusammenhang beispielsweise Kosmetikprodukte wie Rasierschaum, Selbstbräuner oder Duschschaum (Shower Mousse). Beschichtungen zum Schutz des Aluminiums vor dem Kontakt mit dem Füllgut werden jedoch grundsätzlich auch bei weniger aggressiven oder nicht aggressiven Füllgütern eingesetzt, um eine Barriere zwischen Füllgut und Aluminium zu bilden und zu verhindern, dass Aluminium von der Innenseite der Behältnisse freigesetzt wird (aluminium release) und in das Füllgut übergeht. Gemäß dem heutigen Stand der Technik handelt es sich insbesondere bei den Beschichtungen für chemisch aggressive Füllgüter um Zweischichtsysteme, welche aufwendig herzustellen sind, da sie in mehreren Arbeitsgängen aufgetragen werden müssen oder eine Anlagenkonstruktion mit zwei Öfen benötigen. Beschichtungen für nicht aggressive Füllgüter können hingegen je nach Anwendung auch als Einschichtsystem ausgeführt sein.

Ein wesentlicher Nachteil der heutzutage eingesetzten Beschichtungen, unabhängig davon ob es sich um Einschichtsysteme oder Zweischichtsysteme handelt, ist jedoch, dass die Beschichtungen oft gesundheitsschädlich wirkende Stoffe wie zum Beispiel Formaldehyd, Bisphenol A (BPA), Polyvinylchlorid (PVC), Melamin, Polytetrafluorethylen (PTFE), Diacetonalkohol (DAA), Titandioxid (TiO₂) oder Styrol enthalten. Der Einsatz dieser Stoffe im Bereich Kosmetik und Körperpflege, wo die Stoffe mit dem menschlichen Körper in Berührung kommen können, ist deshalb in einer Reihe von Ländern entweder bereits verboten, oder es existieren strenge Grenzwerte, welche eingehalten werden müssen. Aufgrund aktueller Entwicklungen ist zu erwarten, dass selbst für die derzeit noch zulässigen Stoffe die bestehenden Grenzwerte in naher Zukunft weiter verschärft werden oder neue Grenzwerte eingeführt werden. Zudem ist für manche der derzeit noch zulässigen Stoffe zumindest in einigen Ländern auch ein komplettes Verbot zu erwarten. Die bisher verwendeten Beschichtungen können daher in absehbarer Zeit aufgrund verschärfter Regularien zum Gesundheits- und Verbraucherschutz nicht mehr eingesetzt werden.

Eine derartige Problematik besteht nicht nur im Bereich der Kosmetikprodukte und Körperpflegemittel. Denn auch eine Reihe von Lebensmitteln, Haushaltsprodukten oder technischen Füllgütern werden, insbesondere wenn es sich um Aerosol-Produkte oder Schaum-Produkte handelt, in Verpackungsbehältnissen aus Aluminium oder Aluminiumlegierungen wie beispielsweise Monoblockdosen verpackt. Aus dem Bereich der Lebensmittel kann beispielhaft Sprühsahne genannt werden, bei der als Treibmittel neben einigen der oben bereits genannten auch Lachgas zum Einsatz kommt. Im Bereich der Haushaltsprodukte können exemplarisch Reinigungsmittel (z.B. Backofenreiniger), Duftsprays, Pflegesprays (z.B. für Wäsche), Ungeziefer-Sprays, Imprägnier-Sprays (z.B. für Bekleidung und/oder Schuhe), oder Desinfektions-Sprays angeführt werden. Beispiele für technische Füllgüter sind unter anderem Lacke, Farbgrundierungen, Schmiermittel (z.B. Öl-Sprays, Kettensprays für Fahrräder), Oberflächenschutz- und Pflegemittel (z.B. für Holz, Metall, Leder, Kunststoff oder Gummi), sowie Reinigungsmittel (z.B. Bremsenreiniger, Felgenreiniger oder Scheibenreiniger für Automobile). Die technischen Füllgüter können dabei für den Hausgebrauch und/oder für den industriellen oder gewerblichen Gebrauch bestimmt sein. Auch in den soeben beschriebenen Bereichen Lebensmittel, Haushalt und technische Füllgüter können die in den innenseitigen Beschichtungen der Verpackungsbehältnisse enthaltenen gesundheitsschädlichen Stoffe mit dem menschlichen Körper in Berührung kommen. Die derzeit verwendeten Beschichtungen sind daher aus Gründen des Gesundheits- und Verbraucherschutzes nachteilig, beziehungsweise können aufgrund verschärfter Regularien in absehbarer Zeit nicht mehr eingesetzt werden.

Vor diesem Hintergrund hat sich der vorliegenden Erfindung die Aufgabe gestellt, ein Aluminiumlegierungsband aus einer Aluminiumlegierung des Typs AA3xxx oder AA5xxx zur Herstellung eines Verpackungsbehältnisses oder eines Teils eines Verpackungsbehältnisses anzugeben, mit welchem eine hohe chemische Beständigkeit erreicht werden kann, ohne dass hierfür gesundheitsschädlich wirkende Stoffe eingesetzt werden müssen. Ferner hat sich der Erfindung auch die Aufgabe gestellt, ein Verfahren zur Herstellung eines solchen Aluminiumlegierungsbands bereitzustellen, sowie eine vorteilhafte Verwendung des Aluminiumlegierungsbands anzugeben. Schließlich hat sich der Erfindung die Aufgabe gestellt, ein Teil eines Verpackungsbehältnisses, welches eine hohe chemische Beständigkeit aufweist und trotzdem frei von gesundheitsschädlich wirkenden Stoffen ist, sowie ein entsprechendes Verpackungsbehältnis anzugeben.

Gemäß einer ersten Lehre der Erfindung wird die oben genannte Aufgabe für ein Aluminiumlegierungsband zur Herstellung eines Verpackungsbehältnisses oder eines Teils eines Verpackungsbehältnisses, wobei das Aluminiumlegierungsband eine Aluminiumlegierung des Typs AA3xxx oder AA5xxx aufweist, dadurch gelöst, dass das Aluminiumlegierungsband auf einer Seite oder auf beiden Seiten eine Beschichtung aufweist, welche Polyolefin enthält, wobei die Beschichtung bei Durchführung des beschleunigten zyklischen elektrochemischen Verfahrens gemäß EN ISO 17463 nach sechs Zyklen eine Impedanz von mindestens 40 kΩ bei einer Frequenz von 0,1 Hz aufweist, wobei das beschleunigte zyklische elektrochemische Verfahren in einer Versuchslösung mit einem pH-Wert von 12 durchgeführt wird.

Im Rahmen der Erfindung hat sich als Ergebnis umfangreicher Versuche überraschenderweise herausgestellt, dass eine Beschichtung, welche Polyolefin enthält, eine hohe chemische Beständigkeit eines Aluminiumlegierungsbands, welches eine Aluminiumlegierung des Typs AA3xxx oder AA5xxx aufweist, sicherstellt. Das erfindungsgemäße Aluminiumlegierungsband eignet sich daher für die Herstellung von Verpackungsbehältnissen oder Teilen davon, insbesondere wenn das Verpackungsbehältnis für ein chemisch aggressives Füllgut bestimmt ist.

Dadurch, dass die Beschichtung des erfindungsgemäßen Aluminiumlegierungsbands Polyolefin enthält, weist die Beschichtung zudem eine hohe Gesundheitsverträglichkeit auf, sodass die diesbezüglichen Regularien und Grenzwerte, welche entweder bereits heute oder zumindest in absehbarer Zeit in verschiedenen Ländern gelten, eingehalten werden können. Insbesondere ist die Beschichtung des erfindungsgemäßen Aluminiumlegierungsbands frei von Formaldehyd, Bisphenol A (BPA), Polyvinylchlorid (PVC), Melamin, Polytetrafluorethylen (PTFE), Diacetonalkohol (DAA), Titandioxid (TiO₂) und Styrol.

Ferner handelt es sich bei der Polyolefin enthaltenden Beschichtung des erfindungsgemäßen Aluminiumlegierungsbands um ein Einschichtsystem, was mit Blick auf eine zeit- und kosteneffiziente Herstellung vorteilhaft ist, da der zusätzliche Aufwand für die Herstellung eines Zweischichtsystems entfällt. Insbesondere kann die Polyolefin enthaltende Beschichtung des erfindungsgemäßen Aluminiumlegierungsbands bei Coil-Coating-Anlagen, die lediglich einen Schwebetrockner enthalten, in nur einem Arbeitsgang produziert werden. Hingegen erfordert die Herstellung der Zweischichtsysteme, welche gemäß heutigem Stand der Technik bei chemisch aggressiven Füllgütern eingesetzt werden, entweder einen zusätzlichen Arbeitsgang oder einen zweiten Schwebetrockner.

Es hat sich darüber hinaus herausgestellt, dass sich die Polyolefin enthaltende Beschichtung des erfindungsgemäßen Aluminiumlegierungsbands grundsätzlich auch für die Herstellverfahren von Verpackungsbehältnissen oder Teilen davon eignet.

Das erfindungsgemäße Aluminiumlegierungsband weist auf einer Seite oder auf beiden Seiten eine Beschichtung auf, welche Polyolefin enthält. Im Falle einer einseitigen Beschichtung ist die Polyolefin enthaltende Beschichtung vorzugsweise auf derjenigen Seite des Aluminiumlegierungsbands aufgebracht, welche einer Innenseite eines Verpackungsbehältnisses oder eines Teils davon entspricht und dazu vorgesehen ist, mit einem Füllgut in Kontakt zu kommen, sobald sich das Füllgut in dem Verpackungsbehältnis befindet. Auf diese Weise kann die hohe chemische Beständigkeit des erfindungsgemäßen Aluminiumlegierungsbands auf der als Innenseite vorgesehenen Seite sichergestellt werden. Im Falle einer beidseitigen Beschichtung ist die Polyolefin enthaltende Beschichtung vorzugsweise zusätzlich auch auf derjenigen Seite des Aluminiumlegierungsbands aufgebracht, welche einer Außenseite eines Verpackungsbehältnisses oder eines Teils davon entspricht und nicht dazu vorgesehen ist, mit einem Füllgut in Kontakt zu kommen, solange das Füllgut nicht aus dem Verpackungsbehältnis entnommen wird oder austritt. In diesem Zusammenhang hat sich gezeigt, dass die Beschichtung des erfindungsgemäßen Aluminiumlegierungsbands auch auf der als Außenseite vorgesehenen Seite eine ausreichende chemische Beständigkeit sicherstellt. Dies ist beispielsweise relevant, wenn das Füllgut bei der Entnahme durch einen Benutzer mit der Außenseite des Verpackungsbehältnisses oder eines Teils davon in Kontakt kommt. Daneben hat sich gezeigt, dass die Beschichtung des erfindungsgemäßen Aluminiumlegierungsbands auch gut als Grundlage für weitere Beschichtungen geeignet ist, wodurch eine einfache optische Gestaltung der Außenseite der Verpackungsbehältnisse, beispielsweise durch Bedrucken oder Lackieren, ermöglicht wird.

Ferner weist die Beschichtung des erfindungsgemäßen Aluminiumlegierungsbands bei Durchführung des beschleunigten zyklischen elektrochemischen Verfahrens gemäß EN ISO 17463 nach sechs Zyklen eine Impedanz von mindestens 40 kΩ bei einer Frequenz von 0,1 Hz auf, wobei das beschleunigte zyklische elektrochemische Verfahren in einer Versuchslösung mit einem pH-Wert von 12 durchgeführt wird. In einer bevorzugten Ausführungsform des erfindungsgemäßen Aluminiumlegierungsbands weist die Beschichtung unter diesen Versuchsbedingungen nach sechs Zyklen eine Impedanz von mindestens 50 kΩ, besonders bevorzugt von mindestens 60 kΩ auf.

Mit dem beschleunigten zyklischen elektrochemischen Verfahren (engl.: accelerated cyclic electrochemical technique, ACET) gemäß EN ISO 17463 liefert allgemein eine Aussage über die Haftung einer Beschichtung auf der Oberfläche eines metallischen Substrats, indem die Widerstandsfähigkeit der Beschichtung gegenüber Beanspruchungen durch kathodische Polarisationen untersucht wird. Das Verfahren beginnt damit, dass der Ausgangszustand der Beschichtung durch eine elektrochemische Impedanzspektroskopie-Messung charakterisiert wird. Im weiteren Verlauf des Verfahrens werden dann mehrere Zyklen durchgeführt, wobei jeder Zyklus die Schritte (i) kathodische Polarisation, (ii) Potentialrelaxation und (iii) elektrochemische Impedanzspektroskopie umfasst. Für die kathodische Polarisation (Schritt (i)) wird die Oberfläche des Substrats durch Anlegen eines konstanten kathodischen Potentials U_{POL}, welches gegenüber dem Ruhepotential U_{OCP} negativer ist, polarisiert. Hierdurch wird die Beschichtung einer Beanspruchung ausgesetzt. Dabei kann ein Haftungsverlust der Beschichtung dadurch verursacht werden, dass bei dem Potential U_{POL} eine Elektrolyse an der Grenzfläche zwischen der Beschichtung und dem metallischen Substrat stattfindet und hierbei Wasserstoff und/oder Hydroxid-Ionen entstehen. Die anschließende Potentialrelaxation (Schritt (ii) dient dazu, dass sich ein neues Gleichgewicht mit einem neuen Ruhepotential U_{OCP} einstellen kann. Der neue Zustand der Beschichtung wird schließlich durch eine erneute elektrochemische Impedanzspektroskopie-Messung (Schritt (iii)) charakterisiert. Die Schritte (i) kathodische Polarisation, (ii) Potentialrelaxation und (iii) elektrochemische Impedanzspektroskopie werden so lange wiederholt, bis eine vorgegebene Anzahl an Zyklen erreicht ist. Beispielsweise können insgesamt sechs Zyklen durchgeführt werden.

Sowohl für die erste elektrochemische Impedanzspektroskopie-Messung zur Charakterisierung des Ausgangszustands, als auch für jede elektrochemische Impedanzspektroskopie-Messung innerhalb eines Zyklus wird ein sinusförmiges Potenzial mit einer Frequenz f und einer Amplitude A angelegt und der resultierende Wechselstrom gemessen. Die Daten für das Potenzial und den Wechselstrom werden erfasst und bezüglich Amplitude und Phasenverschiebung analysiert. Hieraus wird die Impedanz (genauer: der Betrag der komplexen Impedanz) berechnet. Die Frequenz f kann beispielsweise 0,1 Hz betragen. Grundsätzlich sind Frequenzen im Bereich von einigen mHz bis zu einigen MHz möglich. Dabei kann die Frequenz auch variiert werden, was bedeutet, dass die Impedanz in Abhängigkeit einer sich verändernden Frequenz bestimmt werden kann. Alle in dieser Patentanmeldung angegebenen Impedanzen beziehen sich jedoch auf eine feste Frequenz von 0,1 Hz. Die Amplitude A kann beispielsweise 12,5 mV betragen. Für jede kathodische Polarisation innerhalb eines Zyklus wird ein konstantes kathodisches Potential U_{POL}, welches beispielsweise um 2 V bis 4 V unterhalb des aktuellen Ruhepotentials U_{OCP} liegt, für eine Dauer von 20 min bis 60 min angelegt. Die sich daran anschließenden Phasen der Potentialrelaxation können beispielsweise 160 min bis 180 min dauern.

Das soeben beschriebene beschleunigte zyklische elektrochemische Verfahren kann außerdem in verschiedenen Versuchslösungen, welche beispielsweise verschiedene pH-Werte aufweisen, durchgeführt werden. Hierdurch kann der Kontakt der Beschichtung mit realen Füllgütern wie beispielsweise Füllgütern aus dem Bereich Kosmetik, Körperpflege, Lebensmittel, Haushalt oder technischen Füllgütern in einer Laborumgebung simuliert werden. Beispielsweise können die pH-Werte der Versuchslösungen zwischen 3,5 und 12 liegen, um saure, schwach saure, neutrale, schwach basische und basische Füllgüter zu simulieren. Ein pH-Wert der Versuchslösung von 3,5 entspricht beispielsweise der Simulation eines sauren Füllguts. Ein pH-Wert der Versuchslösung von 5,5 entspricht beispielsweise der Simulation eines schwach sauren Füllguts. Ein pH-Wert der Versuchslösung von 6,8 entspricht beispielsweise der Simulation eines neutralen Füllguts. Ein pH-Wert der Versuchslösung von 8,5 entspricht beispielsweise der Simulation eines schwach basischen Füllguts. Ein pH-Wert der Versuchslösung von 12 entspricht beispielsweise der Simulation eines basischen Füllguts. Falls das beschleunigte zyklische elektrochemische Verfahren in den jeweiligen Versuchslösungen ein positives Ergebnis liefert, kann in der Regel davon ausgegangen werden, dass dies auch für reale Füllgüter der Fall ist. Als positives Ergebnis kann in diesem Zusammenhang eine Impedanz von mindestens 10 kΩ bei einer Frequenz von 0,1 Hz am Ende des sechsten Zyklus angesehen werden, da eine solche Impedanz in entsprechenden Packtests mit einer hinreichenden Haftungsbeständigkeit der Beschichtung korreliert. Das Ergebnis des beschleunigten zyklischen elektrochemischen Verfahrens kann je nach Beschichtung vom pH-Wert der Versuchslösung beziehungsweise des damit simulierten Füllguts abhängen. Beispielsweise existieren Beschichtungen, welche den oben beschriebenen Impedanz-Grenzwert von 10 kΩ in sauren Umgebungen zum Teil deutlich übertreffen, während sie den Grenzwert in basischen Umgebungen nicht oder nur knapp übertreffen. Andererseits existieren auch Beschichtungen, welche ein umgekehrtes Verhalten zeigen.

Wie bereits erwähnt weist die Beschichtung des erfindungsgemäßen Aluminiumlegierungsbands bei Durchführung des beschleunigten zyklischen elektrochemischen Verfahrens gemäß EN ISO 17463 nach sechs Zyklen eine Impedanz von mindestens 40 kΩ, bevorzugt mindestens 50 kΩ, besonders bevorzugt mindestens 60 kΩ bei einer Frequenz von 0,1 Hz auf, wobei das beschleunigte zyklische elektrochemische Verfahren in einer Versuchslösung mit einem pH-Wert von 12 durchgeführt wird. Hierdurch kann vor dem Hintergrund der obigen Ausführungen insbesondere in basischen Umgebungen eine hohe Haftungsbeständigkeit der Beschichtung erreicht werden, welche wiederum zu einem besseren Schutz des Aluminiums vor dem Kontakt mit dem Füllgut und schließlich zu einer höheren chemischen Beständigkeit des erfindungsgemäßen Aluminiumlegierungsbands führt. Insbesondere mit Blick auf basische Füllgüter, wo eine hohe Haftungsbeständigkeit der Beschichtung in der Regel schwieriger zu realisieren ist als bei sauren oder neutralen Füllgütern, eignet sich das erfindungsgemäße Aluminiumlegierungsband daher gut für die Herstellung von entsprechenden Verpackungsbehältnissen oder Teilen davon.

Neben den bereits genannten Vorteilen kann die Polyolefin enthaltende Beschichtung in einer bevorzugten Ausführungsform des erfindungsgemäßen Aluminiumlegierungsbands auch heißsiegelfähig sein. Insbesondere kann eine weitere Beschichtung, wie beispielsweise eine als Barriereschicht wirkende Polymerschicht, vorzugsweise eine Polypropylenfolie, durch das einfache und erprobte Verfahren des Heißsiegelns mit der Polyolefin enthaltenden Beschichtung verbunden werden. Allgemein werden Kunststoffteile beim Heißsiegeln dadurch miteinander verbunden, dass Fügeflächen der zu verbindenden Teile erhitzt und aneinander gedrückt werden, sodass eine Verschmelzung erfolgt. Dadurch, dass die Polyolefin enthaltende Beschichtung heißsiegelfähig ist, ist ein kostengünstiges und prozesssicheres Aufbringen der weiteren Beschichtung möglich.

Alternativ kann eine weitere Beschichtung, etwa eine als Barriereschicht wirkende Polymerschicht, jedoch auch mittels anderer geeigneter Verbindungstechniken, wie beispielsweise durch Kaschieren, auf der Polyolefin enthaltenden Beschichtung aufgebracht werden.

In einer bevorzugten Ausführungsform des erfindungsgemäßen Aluminiumlegierungsbands ist das Polyolefin Polyethylen oder Polypropylen oder ein Blend aus beiden. Polyethylen (PE) und Polypropylen (PP) sind die beiden am weitesten verbreiteten Polyolefine und besonders kostengünstig. Trotzdem kann mit ihnen eine hohe chemische Beständigkeit des erfindungsgemäßen Aluminiumlegierungsbands sichergestellt werden.

In einer bevorzugten Ausführungsform des erfindungsgemäßen Aluminiumlegierungsbands ist das Polyolefin zumindest teilweise vernetzt. Bei der Vernetzung eines Polyolefins, und allgemein eines Polymers, werden die kettenförmigen Makromoleküle des Polymers durch chemische Reaktionen zu einem dreidimensionalen Netzwerk verknüpft. Die Vernetzung hat unter anderem zur Folge, dass sich die Härte sowie die Zähigkeit des Polymers erhöhen und sich seine Löslichkeit verringert. Dies wirkt sich jeweils vorteilhaft für die Herstellung von Verpackungsbehältnissen oder Teilen davon aus, da sowohl die mechanische als auch die chemische Beständigkeit der Beschichtung verbessert wird.

In einer bevorzugten Ausführungsform des erfindungsgemäßen Aluminiumlegierungsbands ist das Polyolefin zumindest teilweise durch ein Hydroxyalkylamid vernetzt. Insbesondere handelt es sich bei dem Hydroxyalkylamid um N,N,N',N'-Tetrakis(2-hydroxyethyl)adipamid. Hydroxyalkylamide, und insbesondere das genannte N,N,N',N'-Tetrakis(2-hydroxyethyl)adipamid, eignen sich aufgrund ihrer chemischen Eigenschaften gut zur Vernetzung von Polyolefinen, sodass eine effektive Vernetzung erfolgt. N,N,N',N'-Tetrakis(2-hydroxyethyl)adipamid als Vernetzungsmittel bringt unter dem Aspekt des Gesundheitsschutzes darüber hinaus den Vorteil mit sich, dass bisher keine gesundheitsschädlichen Wirkungen bekannt sind.

In einer bevorzugten Ausführungsform des erfindungsgemäßen Aluminiumlegierungsbands enthält die Beschichtung Wachs. Vorzugsweise handelt es sich dabei um ein PTFE-freies Wachs wie beispielsweise Carnaubawachs, Polyethylenwachs, Polypropylenwachs, Polyamidwachs oder eine Mischung der genannten Wachse. Dadurch, dass die Beschichtung des erfindungsgemäßen Aluminiumlegierungsbands Wachs enthält, kann die Oberflächenglätte der Beschichtung erhöht werden. Dies wirkt sich vorteilhaft auf die Handhabung des Aluminiumlegierungsbands sowie daraus hergestellter Verpackungsbehältnisse oder Teile davon in Fertigungsprozessen, beispielsweise bei der Beförderung innerhalb einer Fertigungslinie, aus und verbessert zudem auch die Stanzfähigkeit des Aluminiumlegierungsbands. Darüber hinaus ist PTFE-freies Wachs im Allgemeinen auch unproblematisch im Hinblick auf Gesundheitsverträglichkeit und diesbezügliche Regularien.

In einer bevorzugten Ausführungsform des erfindungsgemäßen Aluminiumlegierungsbands weist die Beschichtung ein Flächengewicht von 1,0 g/m² bis 20,0 g/m² auf. Bevorzugt weist die Beschichtung ein Flächengewicht von 1,5 g/m² bis 14,0 g/m² auf. Besonders bevorzugt weist die Beschichtung ein Flächengewicht von 2,0 g/m² bis 5,0 g/m² oder 8,0 g/m² bis 13,0 g/m² auf. Am meisten bevorzugt weist die Beschichtung ein Flächengewicht von 2,5 g/m² bis 4,5 g/m² oder 8,5 g/m² bis 12,5 g/m² auf. Bei den genannten Flächengewichten handelt es sich jeweils um Trockengewichte. Bei gegebener Massendichte korreliert das Flächengewicht der Beschichtung mit der Dicke der Beschichtung. Dadurch, dass die Beschichtung ein Flächengewicht im Bereich von 1,0 g/m² bis 20,0 g/m² aufweist, kann ein guter Kompromiss zwischen ausreichender chemischer Beständigkeit und niedrigem Materialeinsatz erreicht werden. Ein besonders guter Kompromiss wird im bevorzugten Bereich von 1,5 g/m² bis 14,0 g/m² erreicht. Ein niedrigeres Flächengewicht, insbesondere im besonders bevorzugten Bereich von 2,0 g/m² bis 5,0 g/m² oder am meisten bevorzugt 2,5 g/m² bis 4,5 g/m², führt zu einem niedrigeren Materialeinsatz und damit zu einer Kostenreduzierung. Ein höheres Flächengewicht, insbesondere im besonders bevorzugten Bereich von 8,0 g/m² bis 13,0 g/m² oder am meisten bevorzugt 8,5 g/m² bis 12,5 g/m², führt zu einer höheren chemischen Beständigkeit des erfindungsgemäßen Aluminiumlegierungsbands.

In einer bevorzugten Ausführungsform des erfindungsgemäßen Aluminiumlegierungsbands weist das erfindungsgemäße Aluminiumlegierungsband auf beiden Seiten eine Beschichtung auf, welche Polyolefin enthält, wobei die Beschichtung auf einer ersten Seite des Aluminiumlegierungsbands ein Flächengewicht von 8,0 g/m² bis 13,0 g/m², bevorzugt 8,5 g/m² bis 12,5 g/m², und die Beschichtung auf einer zweiten Seite des Aluminiumlegierungsbands ein Flächengewicht von 2,0 g/m² bis 5,0 g/m², bevorzugt 2,5 g/m² bis 4,5 g/m², aufweist. Die erste Seite des Aluminiumlegierungsbands kann dabei einer Innenseite eines Verpackungsbehältnisses oder eines Teils davon entsprechen und kann dazu vorgesehen sein, mit einem Füllgut in Kontakt zu kommen, sobald sich das Füllgut in dem Verpackungsbehältnis befindet. Durch das vergleichsweise hohe Flächengewicht der Polyolefin enthaltenden Beschichtung auf der ersten Seite des erfindungsgemäßen Aluminiumlegierungsbands kann sichergestellt werden, dass die Innenseite des Verpackungsbehältnisses oder des Teils davon eine hohe chemische Beständigkeit aufweist. Die zweite Seite des Aluminiumlegierungsbands kann einer Außenseite eines Verpackungsbehältnisses oder eines Teils davon entsprechen und kann nicht dazu vorgesehen sein, mit einem Füllgut in Kontakt zu kommen, solange das Füllgut nicht aus dem Verpackungsbehältnis entnommen wird oder austritt. Durch das vergleichsweise niedrige Flächengewicht der Polyolefin enthaltenden Beschichtung auf der zweiten Seite des erfindungsgemäßen Aluminiumlegierungsbands kann sichergestellt werden, dass die Außenseite des Verpackungsbehältnisses oder eines Teils davon eine immer noch ausreichende chemische Beständigkeit aufweist, wobei jedoch der Materialeinsatz und damit auch die Kosten reduziert werden können.

In einer bevorzugten Ausführungsform des erfindungsgemäßen Aluminiumlegierungsbands weist eine beschichtete Seite des Aluminiumlegierungsbands in einer Schlagfalt-Prüfung eine Korrosionslinie von maximal 20 mm, bevorzugt maximal 15 mm, besonders bevorzugt maximal 12 mm, auf. Dies ist so zu verstehen, dass bei einem einseitig beschichteten Aluminiumlegierungsband entsprechend dieser bevorzugten Ausführungsform die beschichtete Seite des Aluminiumlegierungsbands eine Korrosionslinie von maximal 20 mm, bevorzugt maximal 15 mm, besonders bevorzugt maximal 12 mm, aufweist. Bei einem beidseitig beschichteten Aluminiumlegierungsband kann beispielsweise eine erste Seite, welche einer Innenseite eines aus dem Aluminiumlegierungsband hergestellten Verpackungsbehältnisses oder eines Teils davon entsprechen kann, eine Korrosionslinie von maximal 20 mm, bevorzugt maximal 15 mm, besonders bevorzugt maximal 12 mm, aufweisen, während eine zweite Seite, welche einer Außenseite eines aus dem Aluminiumlegierungsband hergestellten Verpackungsbehältnisses oder eines Teils davon entsprechen kann, auch eine Korrosionslinie von mehr als 20 mm aufweisen kann. Alternativ können beide Seiten eines beidseitig beschichteten Aluminiumlegierungsbands entsprechend dieser bevorzugten Ausführungsform eine Korrosionslinie von maximal 20 mm, bevorzugt maximal 15 mm, besonders bevorzugt maximal 12 mm, aufweisen. Allgemein kann eine Schlagfalt-Prüfung beispielsweise mit dem Schlagfalt-Prüfgerät, Modell 471, der Firma Erichsen durchgeführt werden. Die Schlagfalt-Prüfung dient der Beurteilung der Verformbarkeit beschichteter Bleche und simuliert gängige Blechverarbeitungen wie beispielsweise Stanzen, Falzen und Bördeln. Das Prinzip der Prüfung besteht darin, dass ein vorgebogenes, beschichtetes Prüfblech einer definierten Schlagbeanspruchung unterworfen wird. Dabei erfolgt die Verformung einer zuvor zylindrischen Biegekante in eine konische Biegekante. Anhand der konischen Biegekante wird beurteilt, von welchem Biegeradius an die Beschichtung Beschädigungen aufweist. Zur Durchführung der Prüfung wird das Prüfblech U-förmig um einen Biegedorn gebogen. Dabei muss die zu untersuchende beschichtete Seite des Prüfblechs nach außen zeigen. Anschließend wird das Prüfblech von einem Schlaghammer, der aus einer vorgegebenen Höhe auf den Biegedorn fällt, verformt. Zur Auswertung der Prüfung wird das Prüfblech für 5 Minuten in eine Lösung eingetaucht, welche beispielsweise aus 1l destilliertem Wasser, 100 g Kupfersulfat, 50 g Zitronensäure und 168 ml konzentrierter Salzsäure (HCl-Gehalt: 37 Gew.-%) besteht, und anschließend unter fließendem Wasser abgespült. Die Beschädigungen der Beschichtung werden dadurch entweder als Korrosionslinien oder als Korrosionspunkte des Prüfblechs sichtbar. Als Messergebnis wird die Streckenlänge der äußeren Korrosionslinie plus der Korrosionspunkte bis zum Knickpunkt der Maximalfalzung gemessen. Je kürzer die gemessene Strecke ist, desto besser ist die Verformbarkeit der Beschichtung. Dadurch, dass eine beschichtete Seite des erfindungsgemäßen Aluminiumlegierungsbands in der soeben beschrieben Schlagfalt-Prüfung eine Korrosionslinie von maximal 20 mm aufweist, kann eine hohe Verformbarkeit der Beschichtung auf der beschichteten Seite bereitgestellt werden, was für die Herstellung von Verpackungsbehältnissen oder Teilen davon vorteilhaft ist. Durch eine Korrosionslinie von bevorzugt maximal 15 mm, besonders bevorzugt maximal 12 mm, kann eine entsprechend höhere Verformbarkeit bereitgestellt werden.

In einer bevorzugten Ausführungsform des erfindungsgemäßen Aluminiumlegierungsbands weist die Beschichtung einen Gleitreibungskoeffizienten µ_{D} von maximal 0,1, bevorzugt maximal 0,09, besonders bevorzugt maximal 0,08, auf. Der Gleitreibungskoeffizient µ_{D} kann beispielsweise mit dem Messgerät "MODEL 9505AER Mobility Tester" der Firma ALTEK gemessen werden. Hierbei wird ein Gewicht bekannter Masse, in dessen Unterseite rollbare Metallkugeln eingelassen sind, gleichmäßig über ein horizontal ausgerichtetes Teststück eines beschichteten Aluminiumlegierungsbands gezogen und die hierfür notwendige horizontale Zugkraft, welche bei gleichförmiger geradliniger Bewegung gleich der Reibungskraft ist, gemessen. Das Verhältnis aus gemessener Zugkraft und Gewichtskraft des Gewichts bekannter Masse entspricht dem Gleitreibungskoeffizienten µ_{D}. Das Gewicht kann beispielsweise eine Masse von 2 kg aufweisen und die Zuggeschwindigkeit kann beispielsweise 5"/min betragen; der gemessene Gleitreibungskoeffizient ist jedoch innerhalb gewisser Grenzen von diesen beiden Größen unabhängig. Der Gleitreibungskoeffizient µ_{D} gibt eine Aussage über die Oberflächenglätte der Beschichtung. Diese ist unter anderem für die Verarbeitbarkeit des beschichteten Aluminiumlegierungsbands in einem Stanzprozess entscheidend. Ist die Glätte nicht ausreichend, kann eventuell das Material nicht gestanzt werden und es kann beim Stanzen zu erhöhten Abrieb kommen, wenn die Oberfläche zu rau ist. Dadurch, dass die Beschichtung des erfindungsgemäßen Aluminiumlegierungsbands einen Gleitreibungskoeffizienten µ_{D} von maximal 0,1 aufweist, kann eine ausreichende Oberflächenglätte für einen Stanzprozess erreicht werden. Bevorzugt beträgt der Gleitreibungskoeffizient maximal 0,09, besonders bevorzugt maximal 0,08, wodurch die Oberflächenglätte mit Blick auf den Stanzprozess noch weiter verbessert werden kann.

In einer bevorzugten Ausführungsform des erfindungsgemäßen Aluminiumlegierungsbands hält die Beschichtung im Vernetzungstest nach ASTM D4752 mindestens 100 Doppelhüben stand. Der Vernetzungstest mit dem Lösemittel Methyethyketon (MEK) dient der Bestimmung der Lackvernetzung und Lösemittelbeständigkeit einer Polymerbeschichtung. Dazu wird ein Filzpad, oder alternativ ein Stück Watte, mit Methylethylketon (MEK) getränkt und in sogenannten Doppelhüben mit einer definierten Anpresskraft über die Beschichtung geführt. Ein Doppelhub entspricht dabei einer Hin- und Rückbewegung des Filzpads, welches zunächst von einer Ausgangsposition in eine danebenliegende Zwischenposition und anschließend zurück in die Ausgangsposition geführt wird. Mit anderen Worten wird das Filzpad innerhalb eines Doppelhubs auf der Beschichtung einmal hin und her gerieben. Der Anpressdruck kann dabei beispielsweise 0,01 MPa betragen. Die Anzahl der durchgeführten Doppelhübe wird gezählt. Bei jeder Bewegung wird die Oberfläche der Beschichtung von einem dünnen MEK-Film bedeckt, welcher jedoch schnell verdunstet. Die Oberfläche soll nicht mit MEK überschwemmt werden, sondern es muss lediglich darauf geachtet werden, dass die Oberfläche bei jeder Bewegung von neuem mit einem dünnen MEK-Film bedeckt wird. Gegebenenfalls muss das Filzpad zwischendurch erneut mit MEK getränkt werden. Der Vernetzungstest wird entweder abgebrochen, wenn die Beschichtung in dem Bereich, in dem die Doppelhübe ausgeführt werden, zu mindestens 50 % ihrer Fläche abgetragen wurde und die darunter liegende Metallschicht zum Vorschein kommt, oder wenn die Beschichtung einer vorgegebenen Mindestanzahl an Doppelhüben standgehalten hat, ohne dass die Beschichtung zu mindestens 50 % ihrer Fläche abgetragen wurde. Bei der Bestimmung des gegebenenfalls abgetragenen Flächenanteils ist nur die Prüfstrecke zwischen den Wendepunkten zu berücksichtigen; der Bereich der Wendepunkte selbst ist jeweils ausgenommen. Dadurch, dass die Polyolefin enthaltende Beschichtung in einer bevorzugten Ausführungsform des erfindungsgemäßen Aluminiumlegierungsbands im Vernetzungstest nach ASTM D4752 mindestens 100 Doppelhüben standhält, kann eine für Verpackungsbehältnisse oder Teile davon ausreichende Vernetzung und Lösemittelbeständigkeit der Beschichtung erreicht werden.

In einer bevorzugten Ausführungsform des erfindungsgemäßen Aluminiumlegierungsbands tritt kein Haftungsverlust der Beschichtung auf, wenn das Aluminiumlegierungsband einem Schnelltestverfahren unterzogen wird, in dem eine beschichtete Seite eines aus dem Aluminiumlegierungsband hergestellten Prüflings bei einer Temperatur von 60 °C bis 110 °C, vorzugsweise 75 °C bis 95 °C, für eine Dauer von 18 h bis 30 h, vorzugsweise 22 h bis 26 h, mit einem Testmedium in Kontakt gebracht wird, wobei das Testmedium ein Kosmetikprodukt, ein Körperpflegemittel, ein Lebensmittel, ein Haushaltsprodukt, ein technisches Füllgut oder ein chemisches Reagenz oder ein Simulanz ist. Um ein beschichtetes Aluminiumlegierungsband zur Herstellung von Verpackungsbehältnissen für Füllgüter aus dem Bereich Kosmetik, Körperpflege, Lebensmittel, Haushalt, technische Füllgüter oder chemische Reagenzien oder Simulanzien verwenden zu können, muss sichergestellt sein, dass die Beschichtung über die gesamte typische Nutzungsdauer der entsprechenden Produkte eine ausreichend hohe Haftungsbeständigkeit auf dem metallischen Untergrund aufweist. Denn bei einem Haftungsverlust der Beschichtung kann das Füllgut mit dem darunterliegenden Aluminium in Kontakt kommen und reagieren, was wiederum zu einer unerwünschten Zersetzung des Verpackungsbehältnisses und schließlich zur Gefahr eines Berstens des unter Druck stehenden Behältnisses führen kann. Aus diesem Grund werden bisher sogenannte Packtests durchgeführt. Hierbei werden abgefüllte Verpackungsbehältnisse, in denen sich das Füllgut inklusive zugehörigem Treibmittel befindet, für typischerweise 6 bis 9 Monate bei etwa 45 °C gelagert. Anschließend wird untersucht, ob ein Haftungsverlust der Beschichtung aufgetreten ist. Die Packtests sind aufgrund der langen Lagerung jedoch sehr zeitaufwendig. Im Rahmen der vorliegenden Erfindung konnte nun gezeigt werden, dass ein Schnelltestverfahren, in dem ein aus dem Aluminiumlegierungsband hergestellter Prüfling bei einer Temperatur von 60 °C bis 110 °C, vorzugsweise 75 °C bis 95 °C, für eine Dauer von 18 h bis 30 h, vorzugsweise 22 h bis 26 h, mit einem der genannten Füllgüter als Testmedium in Kontakt gebracht wird, im Wesentlichen identische Ergebnisse in Bezug auf die Haftungsbeständigkeit liefert wie die bisherigen Packtests. Es wird vermutet, dass dieser Effekt der erhöhten Temperatur des Schnelltestverfahrens zuzuschreiben ist, welche die geringere Testdauer gerade kompensiert. Damit kann mit einem solchen Schnelltestverfahren die Prüfung der Haftungsbeständigkeit ohne wesentliche Einbußen in der Verlässlichkeit des Testergebnisses in nur 1 bis 2 Tagen, und somit deutlich schneller als mit den bisherigen Packtests, erfolgen. Ferner konnte gezeigt werden, dass das Vorhandensein des Treibmittels das Ergebnis des Schnelltestverfahrens praktisch nicht beeinflusst. Das Schnelltestverfahren kann daher auch ohne Treibmittel durchgeführt werden. Hierdurch lässt sich die Durchführung des Schnelltestverfahrens vereinfachen. Dadurch, dass kein Haftungsverlust der Beschichtung auftritt, wenn das Aluminiumlegierungsband dem hier beschriebenen Schnelltestverfahren unterzogen wird, kann erreicht werden, dass die Haftungsbeständigkeit der Beschichtung ausreichend hoch für die Herstellung von Verpackungsbehältnissen für Füllgüter aus dem Bereich Kosmetik, Körperpflege, Lebensmittel, Haushalt, technische Füllgüter oder chemische Reagenzien oder Simulanzien ist.

In einer bevorzugten Ausführungsform des erfindungsgemäßen Aluminiumlegierungsbands weist die Beschichtung bei Durchführung des beschleunigten zyklischen elektrochemischen Verfahrens gemäß EN ISO 17463 nach sechs Zyklen eine Impedanz von mindestens 0,20 MΩ bei einer Frequenz von 0,1 Hz auf, wobei das beschleunigte zyklische elektrochemische Verfahren in einer Versuchslösung mit einem pH-Wert zwischen 3,5 und 8,5 durchgeführt wird. Beispielsweise beträgt die Impedanz mindestens 25 MΩ für eine Versuchslösung mit einem pH-Wert von 3,5. Beispielsweise beträgt die Impedanz mindestens 2,0 MΩ für eine Versuchslösung mit einem pH-Wert von 5,5. Beispielsweise beträgt die Impedanz mindestens 0,8 MΩ für eine Versuchslösung mit einem pH-Wert von 6,8. Beispielsweise beträgt die Impedanz mindestens 0,20 MΩ für eine Versuchslösung mit einem pH-Wert von 8,5. Dadurch, dass die nach sechs Zyklen gemessene Impedanz bei Versuchslösungen mit einem pH-Wert zwischen 3,5 und 8,5 mindestens 0,20 MΩ beträgt, kann eine hohe Haftungsbeständigkeit der Beschichtung des erfindungsgemäßen Aluminiumlegierungsbands nicht nur wie eingangs beschrieben in basischen Umgebungen (pH 12), sondern auch in sauren (pH 3,5), schwach sauren (pH 5,5), neutralen (pH 6,8) und schwach basischen (pH 8,5) Umgebungen erreicht werden. Der eingangs beschriebene Impedanz-Grenzwert von 10 kΩ wird dabei stets deutlich übertroffen. Aufgrund der verbesserten chemischen Beständigkeit, welche mit dieser hohen Haftungsbeständigkeit einhergeht, eignet sich das erfindungsgemäße Aluminiumlegierungsband besonders gut für die Herstellung von Verpackungsbehältnissen oder Teilen davon, insbesondere wenn das Verpackungsbehältnis für ein chemisch aggressives Füllgut bestimmt ist.

In einer bevorzugten Ausführungsform des erfindungsgemäßen Aluminiumlegierungsbands weist das Aluminiumlegierungsband eine Aluminiumlegierung des Typs AA5754 auf. Diese Aluminiumlegierung weist einen hohen Magnesiumanteil von 2,6 Gew.-% ≤ Mg ≤ 3,6 Gew.-% auf und eignet sich folglich aufgrund der damit verbundenen mechanischen Eigenschaften besonders gut für die Herstellung von Verpackungsbehältnissen. Darüber hinaus eignet sie sich ohne weiteres dazu, mit der Polyolefin enthaltenden Beschichtung versehen zu werden. Vorzugsweise wird der Anteil von Magnesium in der Aluminiumlegierung des Typs AA5754 auf den Bereich 2,66 Gew.-% ≤ Mg ≤ 3,04 Gew.-% begrenzt. Auf diese Weise wird ein guter Kompromiss aus hoher Festigkeit und dennoch ausreichend hoher Umformbarkeit erreicht, sodass sich die angegebene Legierung besonders für die Herstellung von Verpackungsbehältnissen eignet.

In einer bevorzugten Ausführungsform des erfindungsgemäßen Aluminiumlegierungsbands weist das Aluminiumlegierungsband eine Metalldicke von 0,1 mm bis 0,7 mm, bevorzugt von 0,3 mm bis 0,5 mm, besonders bevorzugt von 0,35 mm bis 0,45 mm, auf. Die Metalldicke umfasst dabei nicht die Dicke aller auf dem erfindungsgemäßen Aluminiumlegierungsband gegebenenfalls aufgebrachten Beschichtungen. Dadurch, dass das Aluminiumlegierungsband eine Metalldicke von 0,1 mm bis 0,7 mm aufweist, kann ein guter Kompromiss zwischen ausreichender mechanischer Festigkeit auf der einen Seite und niedrigem Materialeinsatz sowie niedrigem Gewicht auf der anderen Seite erreicht werden. Eine niedrigere Metalldicke führt einerseits zu einem niedrigeren Materialeinsatz und damit zu einer Kostenreduzierung. Andererseits führt eine niedrigere Metalldicke auch zu einem geringeren Gewicht des Verpackungsbehältnisses oder des Teils davon, was insbesondere für den Transport der Verpackungsbehältnisse von Vorteil ist. Eine höhere Metalldicke führt hingegen zu einer besseren mechanischen Festigkeit und damit insbesondere zu einer höheren Innendruckstabilität des Verpackungsbehältnisses oder des Teils davon. Im bevorzugten Bereich der Metalldicke von 0,3 mm bis 0,5 mm wird ein guter Kompromiss zwischen ausreichender mechanischer Festigkeit auf der einen Seite und niedrigem Materialeinsatz sowie niedrigerem Gewicht auf der anderen Seite erreicht. Im besonders bevorzugten Bereich der Metalldicke von 0,35 mm bis 0,45 mm wird ein besonders guter Kompromiss erreicht.

In einer bevorzugten Ausführungsform des erfindungsgemäßen Aluminiumlegierungsbands weist das Aluminiumlegierungsband auf einer Seite oder auf beiden Seiten zusätzlich eine chromfreie Konversionsschicht auf. Bevorzugt ist eine chromfreie Konversionsschicht unmittelbar auf der Metallschicht des Aluminiumlegierungsbands angeordnet und wird von einer Polyolefin enthaltenden Beschichtung bedeckt. Dadurch, dass das erfindungsgemäße Aluminiumlegierungsband eine Konversionsschicht aufweist, kann einerseits ein verbesserter Korrosionsschutz sowie andererseits eine verbesserte Haftung der Polyolefin enthaltenden Beschichtung erreicht werden. Eine chromfreie Konversionsschicht ist dabei gesundheitsverträglicher als eine chromhaltige Konversionsschicht. Vorzugsweise enthält die chromfreie Konversionsschicht Zirkoniumphosphat. Hierdurch lassen sich besonders gute Hafteigenschaften gegenüber der Polyolefin enthaltenden Beschichtung erreichen. Grundsätzlich lässt sich das erfindungsgemäße Aluminiumlegierungsband jedoch auch mit Konversionsschichten, die andere Metallphosphate wie beispielsweise Titanphosphat oder Chromphosphat enthalten, realisieren.

Gemäß einer zweiten Lehre der Erfindung wird die oben genannte Aufgabe für ein Verfahren zur Herstellung eines Aluminiumlegierungsbands, wobei das Verfahren umfasst:
- Gießen eines Walzbarrens oder eines Gießbands aus einer Aluminiumlegierung des Typs AA3xxx oder AA5xxx;
- Homogenisieren des Walzbarrens oder des Gießbands;
- Warmwalzen des Walzbarrens oder des Gießbands zu einem Warmband;
- Kaltwalzen des Warmbands an Enddicke mit mindestens einer Zwischenglühung oder ohne Zwischenglühung;
dadurch gelöst, dass das Verfahren ferner umfasst:
- Erzeugen einer Beschichtung auf einer Seite oder auf beiden Seiten des an Enddicke kaltgewalzten Aluminiumlegierungsbands, wobei die Beschichtung Polyolefin enthält.

Durch die Verfahrensschritte Gießen eines Walzbarrens oder eines Gießbands aus einer Aluminiumlegierung des Typs AA3xxx oder AA5xxx, Homogenisieren des Walzbarrens oder des Gießbands, Warmwalzen des Walzbarrens oder des Gießbands zu einem Warmband und Kaltwalzen des Warmbands an Enddicke mit mindestens einer Zwischenglühung oder ohne Zwischenglühung kann ein Aluminiumlegierungsband aus einer Aluminiumlegierung des Typs AA3xxx oder AA5xxx prozesssicher und effizient hergestellt werden. Wird das Verfahren mit mindestens einer Zwischenglühung durchgeführt, können beim Kaltwalzen entstehende Verfestigungen beseitigt werden, sodass im Anschluss weitere Kaltwalzschritte bis zum Erreichen der Enddicke möglich sind. Grundsätzlich lässt sich das Verfahren jedoch auch ohne Zwischenglühung durchführen. Optional kann das Aluminiumlegierungsband nach dem Kaltwalzen auch einer abschließenden Wärmebehandlung unterzogen werden, wodurch ebenfalls Verfestigungen beseitigt werden können.

Dadurch, dass das erfindungsgemäße Verfahren als zusätzlichen Verfahrensschritt das Erzeugen einer Beschichtung auf einer Seite oder auf beiden Seiten des an Enddicke kaltgewalzten Aluminiumlegierungsbands umfasst, wobei die Beschichtung Polyolefin enthält, kann eine entsprechende Polyolefin enthaltende Beschichtung mit den Vorteilen, welche in Zusammenhang mit der ersten Lehre bereits erläutert wurden, auf dem Aluminiumlegierungsband bereitgestellt werden. Insbesondere wird daher mit dem Verfahren gemäß der zweiten Lehre der Erfindung ein Aluminiumlegierungsband gemäß der ersten Lehre der Erfindung hergestellt.

In einer bevorzugten Ausführungsform des erfindungsgemäßen Verfahrens wird die Beschichtung durch Aufbringen und Einbrennen eines Lacks erzeugt. Hierdurch lässt sich die Polyolefin enthaltende Beschichtung auf kostengünstige und prozesssichere Weise bereitstellen. Grundsätzlich kann die Beschichtung jedoch auch durch andere geeignete Verfahren wie beispielsweise Extrusionsbeschichten oder Kaschieren auf dem an Enddicke kaltgewalzten Aluminiumlegierungsband erzeugt werden.

In einer bevorzugten Ausführungsform des erfindungsgemäßen Verfahrens ist der Lack ein wasserbasierter Lack. Als Vorteil gegenüber einem lösemittelbasierten Lack weist ein wasserbasierter Lack eine bessere Umweltverträglichkeit auf. Daneben ist ein wasserbasierter Lack auch im Hinblick auf Gesundheitsverträglichkeit und diesbezügliche Regularien weniger problematisch.

In einer bevorzugten Ausführungsform des erfindungsgemäßen Verfahrens enthält der Lack eine Polyolefin-Dispersion. Aufgrund der feinen Verteilung des Polyolefins in der Dispersion lässt sich hierdurch beim Aufbringen und Einbrennen des Lacks insbesondere eine homogene Polyolefin enthaltende Beschichtung erzeugen.

In einer bevorzugten Ausführungsform des erfindungsgemäßen Verfahrens ist die Polyolefin-Dispersion eine Polyethylen-Dispersion oder eine Polypropylen-Dispersion oder ein Gemisch aus beiden. Dementsprechend ist das in der erzeugten Beschichtung enthaltene Polyolefin Polyethylen oder Polypropylen oder ein entsprechendes Blend. Polyethylen (PE) und Polypropylen (PP) sind die beiden am weitesten verbreiteten Polyolefine und daher besonders kostengünstig.

In einer bevorzugten Ausführungsform des erfindungsgemäßen Verfahrens enthält der Lack ein Vernetzungsmittel. Hierdurch kann erreicht werden, dass das Polyolefin zumindest teilweise vernetzt wird, sodass sowohl die mechanische als auch die chemische Beständigkeit der Polyolefin enthaltenden Beschichtung verbessert wird, wie bereits in Zusammenhang mit der ersten Lehre ausgeführt wurde.

In einer bevorzugten Ausführungsform des erfindungsgemäßen Verfahrens enthält der Lack als Vernetzungsmittel ein Hydroxyalkylamid. Insbesondere handelt es sich bei dem Hydroxyalkylamid um N,N,N',N'-Tetrakis(2-hydroxyethyl)adipamid. Durch die Verwendung eines Hydroxyalkylamids als Vernetzungsmittel, und insbesondere durch die Verwendung von N,N,N',N'-Tetrakis(2-hydroxyethyl)adipamid, kann eine effektive Vernetzung des Polyolefins sowie eine gute Gesundheitsverträglichkeit erreicht werden, wie bereits in Zusammenhang mit der ersten Lehre ausgeführt wurde.

In einer bevorzugten Ausführungsform des erfindungsgemäßen Verfahrens enthält der Lack Wachs. Insbesondere handelt es sich dabei um ein PTFE-freies Wachs wie beispielsweise Carnaubawachs, Polyethylenwachs, Polypropylenwachs, Polyamidwachs oder eine Mischung der genannten Wachse. Dadurch, dass der Lack Wachs enthält, kann die Oberflächenglätte der Polyolefin enthaltenden Beschichtung erhöht und damit unter anderem die Stanzfähigkeit des Aluminiumlegierungsbands verbessert werden. Darüber hinaus ist PTFE-freies Wachs im Allgemeinen auch unproblematisch im Hinblick auf Gesundheitsverträglichkeit und diesbezügliche Regularien.

In einer bevorzugten Ausführungsform des erfindungsgemäßen Verfahrens enthält der wasserbasierte Lack 1 bis 15 Gew.-%, vorzugsweise 2 bis 6 Gew.-% einer wässrigen Lösung eines Hydroxyalkylamids, 1 bis 20 Gew.-%, vorzugsweise 5 bis 11 Gew.-% PTFE-freies Wachs und als Rest eine wässrige Polyolefin-Dispersion. Die wässrige Polyolefin-Dispersion kann einen Feststoffanteil von bis zu 60 Gew.-%, vorzugsweise 40 bis 50 Gew.-%, aufweisen. Ferner kann es sich bei der wässrigen Polyolefin-Dispersion vorzugsweise um eine wässrige Polyethylen-Dispersion oder um eine wässrige Polypropylen-Dispersion handeln. Bei der wässrigen Lösung eines Hydroxyalkylamids kann es sich vorzugsweise um eine Lösung von 10 bis 90 Gew.-%, bevorzugt 20 bis 40 Gew.-% N,N,N',N'-Tetrakis(2-hydroxyethyl)adipamid in entionisiertem Wasser oder in schwach basischem Wasser, welches 0,1 bis 0,5 Gew.-% N,N-Dimethylethanolamin (DMEA) enthält, handeln. Bei dem PTFE-freien Wachs kann es sich beispielsweise um Carnaubawachs, Polyethylenwachs, Polypropylenwachs, Polyamidwachs oder eine Mischung der genannten Wachse handeln. Mit der angegebenen Zusammensetzung des wasserbasierten Lacks lässt sich erreichen, dass die Polyolefin enthaltende Beschichtung einerseits kostengünstig erzeugt wird, und dass sich die vorteilhaften Eigenschaften der Polyolefin enthaltenden Beschichtung andererseits prozesssicher einstellen.

In einer bevorzugten Ausführungsform des erfindungsgemäßen Verfahrens erfolgt das Aufbringen des Lacks in einem einseitigen oder beidseitigem Coil-Coating-Verfahren. Bei einem Coil-Coating-Verfahren wird das zu beschichtende Aluminiumlegierungsband von einem Coil abgewickelt, beschichtet und wieder auf ein anderes Coil aufgewickelt. Hierdurch lässt sich eine einfache Handhabung des Aluminiumlegierungsbands für den Zweck der Beschichtung erreichen. Grundsätzlich lässt sich das erfindungsgemäße Verfahren jedoch auch mit anderen Methoden zur Handhabung des Aluminiumlegierungsbands realisieren.

In einer bevorzugten Ausführungsform des erfindungsgemäßen Verfahrens erfolgt das Aufbringen des Lacks unter Verwendung eines einseitigen oder beidseitigen Roll-Coating-Verfahrens. Bei einem Roll-Coating-Verfahren wird die Beschichtung durch Rollen einseitig oder beidseitig auf das Aluminiumlegierungsband aufgetragen. Hierdurch lässt sich die Dicke beziehungsweise das Flächengewicht der Beschichtung auch bei hoher Beschichtungsgeschwindigkeit sehr präzise einstellen, sodass eine prozesssichere Beschichtung erreicht werden kann. Grundsätzlich lässt sich das erfindungsgemäße Verfahren jedoch auch mit anderen Beschichtungsmethoden realisieren. Beispielsweise kann die Beschichtung auch durch Aufsprühen, insbesondere durch elektrostatisches Aufsprühen aufgebracht werden.

In einer bevorzugten Ausführungsform des erfindungsgemäßen Verfahrens erfolgt das Einbrennen des Lacks derart, dass eine maximale Metalltemperatur zwischen 200 °C und 300 °C, bevorzugt zwischen 220 °C und 260 °C, erreicht wird. Mit den genannten Bereichen der maximalen Metalltemperatur kann eine prozesssichere Durchhärtung der Polyolefin enthaltenden Beschichtung erreicht werden, ohne dass eine merkliche Entfestigung des Aluminiumlegierungsbands eintritt. Die Einbrenndauer, d.h. die Dauer eines Aufheizvorgangs, an dessen Ende die maximale Metalltemperatur erreicht wird, kann beispielsweise zwischen 5 s und 35 s, bevorzugt zwischen 8 s und 30 s liegen.

In einer bevorzugten Ausführungsform des erfindungsgemäßen Verfahrens wird der Walzbarren oder das Gießband aus einer Aluminiumlegierung des Typs AA5754 gegossen. Diese Aluminiumlegierung weist insbesondere vorteilhafte mechanische Eigenschaften auf, wie bereits in Zusammenhang mit der ersten Lehre ausgeführt wurde. Vorzugsweise wird der Anteil von Magnesium in der Aluminiumlegierung des Typs AA5754 auf den Bereich 2,66 Gew.-% ≤ Mg ≤ 3,04 Gew.-% begrenzt. Auf diese Weise wird ein guter Kompromiss aus Festigkeit und Umformbarkeit erreicht, wie ebenfalls in Zusammenhang mit der ersten Lehre ausgeführt wurde.

In einer bevorzugten Ausführungsform des erfindungsgemäßen Verfahrens erfolgt das Kaltwalzen des Warmbands an Enddicke bis zu einer Metalldicke von 0,1 mm bis 0,7 mm, bevorzugt von 0,3 mm bis 0,5 mm, besonders bevorzugt von 0,35 mm bis 0,45 mm. Die Metalldicke umfasst dabei nicht die Dicke aller auf dem erfindungsgemäßen Aluminiumlegierungsband gegebenenfalls aufgebrachten Beschichtungen. Durch die genannten Bereiche der Metalldicke kann ein guter Kompromiss zwischen ausreichender mechanischer Festigkeit und niedrigem Materialeinsatz sowie niedrigem Gewicht erreicht werden, wie bereits in Zusammenhang mit der ersten Lehre ausgeführt wurde.

In einer bevorzugten Ausführungsform des erfindungsgemäßen Verfahrens wird das Aluminiumlegierungsband auf einer Seite oder auf beiden Seiten einer chromfreien Phosphatierung unterzogen. Vorzugsweise erfolgt die chromfreie Phosphatierung unter Verwendung von Zirkoniumphosphat. Mittels einer chromfreien Phosphatierung, vorzugsweise unter Verwendung von Zirkoniumphosphat, lässt sich auf einer Seite oder auf beiden Seiten des Aluminiumlegierungsbands eine chromfreie Konversionsschicht, welche vorzugsweise Zirkoniumphosphat enthält, erzeugen, deren Vorteile bereits in Zusammenhang mit der ersten Lehre ausgeführt wurden. Grundsätzlich können jedoch anstelle von Zirkoniumphosphat auch andere Metallphosphate, wie beispielsweise Titanphosphat oder Chromphosphat, für die Phosphatierung verwendet werden. Vorzugsweise erfolgt die Phosphatierung so, dass eine erzeugte Konversionsschicht unmittelbar auf der Metallschicht des Aluminiumlegierungsbands angeordnet ist und von einer anschließend aufgebrachten Polyolefin enthaltenden Beschichtung bedeckt wird. Besonders bevorzugt kann die Phosphatierung gemeinsam mit dem Coil-Coating-Verfahren zum Aufbringen des Lacks, also "in Line", durchgeführt werden. Hierdurch können Auf- und Abwickelvorgänge des Aluminiumlegierungsbands eingespart werden, sodass eine bessere Verfahrenseffizienz erreicht wird. Die Phosphatierung erfolgt vorzugsweise in einem No-Rinse-Verfahren, bei dem kein Spülschritt erforderlich ist, da das Phosphatierungsmittel auf das Aluminiumlegierungsband aufgebracht und eingetrocknet wird. Gegenüber Phosphatierungsverfahren mit Spülschritten sind No-Rinse-Verfahren wirtschaftlicher und umweltfreundlicher.

Gemäß einer dritten Lehre der Erfindung wird die oben genannte Aufgabe für eine Verwendung eines Aluminiumlegierungsbands dadurch gelöst, dass das Aluminiumlegierungsband gemäß der ersten Lehre zur Herstellung eines Verpackungsbehältnisses oder eines Teils eines Verpackungsbehältnisses verwendet wird. Insbesondere aufgrund der Polyolefin enthaltenden Beschichtung des Aluminiumlegierungsbands gemäß der ersten Lehre kann durch eine solche Verwendung ein Verpackungsbehältnis oder ein Teil eines Verpackungsbehältnisses hergestellt werden, welches eine hohe chemische Beständigkeit gegenüber verschiedenen Füllgütern aufweist. Dies gilt in besonderem Maße für chemisch aggressive Füllgüter, jedoch grundsätzlich auch für weniger aggressive oder nicht aggressive Füllgüter. Trotz der hohen chemischen Beständigkeit weist das hergestellte Verpackungsbehältnis oder das Teil davon eine hohe Gesundheitsverträglichkeit auf, da die Polyolefin enthaltende Beschichtung des Aluminiumlegierungsbands gemäß der ersten Lehre insbesondere frei von Formaldehyd, Bisphenol A (BPA), Polyvinylchlorid (PVC), Melamin, Polytetrafluorethylen (PTFE), Diacetonalkohol (DAA), Titandioxid (TiO₂) und Styrol ist. Daher können sowohl die heute bereits in verschiedenen Ländern geltenden Regularien und Grenzwerte zur Gesundheitsverträglichkeit, als auch die in absehbarer Zeit eingeführten Regularien und Grenzwerte eingehalten werden. Bezüglich weiterer Ausgestaltungen und Vorteile der erfindungsgemäßen Verwendung wird ergänzend auf die Ausführungen in Zusammenhang mit der ersten Lehre verwiesen.

In einer bevorzugten Ausführungsform der erfindungsgemäßen Verwendung wird ein Verpackungsbehältnis oder ein Teil eines Verpackungsbehältnisses für ein Kosmetikprodukt, ein Körperpflegemittel, ein Lebensmittel, ein Haushaltsprodukt oder ein technisches Füllgut hergestellt. Füllgütern aus den genannten Bereichen Kosmetik, Körperpflege, Lebensmittel, Haushalt und Technik ist gemein, dass sie mit dem menschlichen Körper in Berührung kommen können. Wenn nun gesundheitsschädigende Stoffe wie beispielsweise Formaldehyd, Bisphenol A (BPA), Polyvinylchlorid (PVC), Melamin, Polytetrafluorethylen (PTFE), Diacetonalkohol (DAA), Titandioxid (TiO₂) oder Styrol in den Beschichtungen entsprechender Verpackungsbehältnisse oder Teile davon enthalten sind, besteht grundsätzlich die Gefahr, dass die genannten Stoffe in das Füllgut übergehen und ebenfalls mit dem menschlichen Körper in Berührung kommen. Daraus können sich gesundheitsschädigende Auswirkungen für Benutzer und Verbraucher ergeben.

Nachdem die Polyolefin enthaltende Beschichtung des erfindungsgemäßen Aluminiumlegierungsbands jedoch frei von den genannten gesundheitsschädigenden Stoffen ist, ist das Aluminiumlegierungsband in besonderem Maße zur Herstellung von Verpackungsbehältnissen oder Teilen davon für Füllgüter aus den Bereichen Kosmetik, Körperpflege, Lebensmittel, Haushalt und Technik geeignet.

In einer bevorzugten Ausführungsform der erfindungsgemäßen Verwendung wird als Teil eines Verpackungsbehältnisses ein Ventilteller für eine Monoblockdose hergestellt. Durch eine derartige Verwendung des erfindungsgemäßen Aluminiumlegierungsbands kann ein Ventilteller für eine Monoblockdose hergestellt werden, welcher eine hohe chemische Beständigkeit insbesondere gegenüber aggressiven Füllgütern aufweist, jedoch frei von Formaldehyd, Bisphenol A (BPA), Polyvinylchlorid (PVC), Melamin, Polytetrafluorethylen (PTFE), Diacetonalkohol (DAA), Titandioxid (TiO₂) und Styrol ist. Besonders vorteilhaft ist es hierbei, wenn das erfindungsgemäße Aluminiumlegierungsband eine Aluminiumlegierung des Typs AA5xxx aufweist, da entsprechende Aluminiumlegierungen aufgrund ihres Magnesium-Anteils eine höhere Festigkeit aufweisen. Ein unerwünschtes Ausbeulen des Ventiltellers lässt sich daher leichter verhindern. Allerdings ist es ebenso denkbar, dass ein Ventilteller für eine Monoblockdose aus einem Aluminiumlegierungsband mit einer Aluminiumlegierung des Typs AA3xxx hergestellt wird, wenn hier die geringere Festigkeit der Aluminiumlegierung beispielsweise durch eine höhere Metalldicke oder durch andere geeignete Maßnahmen kompensiert wird. Zudem eignet sich das erfindungsgemäße Aluminiumlegierungsband grundsätzlich für die Herstellung einer Vielzahl unterschiedlicher Typen von Verpackungsbehältnissen oder Teilen davon. Beispielsweise ist es auch denkbar, dass ein Dosenkörper einer Monoblockdose aus dem erfindungsgemäßen Aluminiumlegierungsband hergestellt wird. Hierbei kann das Aluminiumlegierungsband insbesondere eine Aluminiumlegierung des Typs AA3xxx aufweisen, um vorteilhafte Umformeigenschaften bereitzustellen.

Gemäß einer vierten Lehre der Erfindung wird die oben genannte Aufgabe für ein Teil eines Verpackungsbehältnisses dadurch gelöst, dass das Teil eines Verpackungsbehältnisses aus einem Aluminiumlegierungsband gemäß der ersten Lehre hergestellt ist. Ein solches Teil eines Verpackungsbehältnisses weist eine hohe chemische Beständigkeit insbesondere gegenüber aggressiven Füllgütern auf und ist dennoch frei von Formaldehyd, Bisphenol A (BPA), Polyvinylchlorid (PVC), Melamin, Polytetrafluorethylen (PTFE), Diacetonalkohol (DAA), Titandioxid (TiO₂) und Styrol. Bezüglich weiterer Ausgestaltungen und Vorteile wird ergänzend auf die Ausführungen in Zusammenhang mit der ersten und dritten Lehre verwiesen.

In einer bevorzugten Ausführungsform des erfindungsgemäßen Teils eines Verpackungsbehältnisses ist das Teil eines Verpackungsbehältnisses ein Teil eines Verpackungsbehältnisses für ein Kosmetikprodukt, ein Körperpflegemittel, ein Lebensmittel, ein Haushaltsprodukt oder ein technisches Füllgut. Aufgrund seiner hohen chemischen Beständigkeit ist das erfindungsgemäße Teil eines Verpackungsbehältnisses in besonderem Maße für die Verpackung von Füllgütern aus den Bereichen Kosmetik, Körperpflege, Lebensmittel, Haushalt und Technik geeignet. Hierzu wird auf die Ausführungen im Zusammenhang mit der dritten Lehre verwiesen.

In einer bevorzugten Ausführungsform des erfindungsgemäßen Teils eines Verpackungsbehältnisses ist das Teil eines Verpackungsbehältnisses ein Ventilteller für eine Monoblockdose. Ein derartiger Ventilteller weist eine hohe chemische Beständigkeit insbesondere gegenüber aggressiven Füllgütern auf, ist jedoch frei von Formaldehyd, Bisphenol A (BPA), Polyvinylchlorid (PVC), Melamin, Polytetrafluorethylen (PTFE), Diacetonalkohol (DAA), Titandioxid (TiO₂) und Styrol. Zudem weist ein derartiger Ventilteller aufgrund des Magnesium-Anteils der Aluminiumlegierung vorteilhafte mechanische Eigenschaften auf. Ergänzend wird hierzu auf die Ausführungen im Zusammenhang mit der dritten Lehre verwiesen.

Gemäß einer fünften Lehre der Erfindung wird die oben genannte Aufgabe für ein Verpackungsbehältnis dadurch gelöst, dass das Verpackungsbehältnis aus einem Aluminiumlegierungsband gemäß der ersten Lehre hergestellt ist oder zumindest ein Teil umfasst, welches aus einem Aluminiumlegierungsband gemäß der ersten Lehre hergestellt ist. Ein derartiges Verpackungsbehältnis weist eine hohe chemische Beständigkeit insbesondere gegenüber aggressiven Füllgütern auf und ist dennoch frei von Formaldehyd, Bisphenol A (BPA), Polyvinylchlorid (PVC), Melamin, Polytetrafluorethylen (PTFE), Diacetonalkohol (DAA), Titandioxid (TiO₂) und Styrol. Bezüglich weiterer Ausgestaltungen und Vorteile wird ergänzend auf die Ausführungen in Zusammenhang mit der ersten und dritten Lehre verwiesen.

In einer bevorzugten Ausführungsform des erfindungsgemäßen Verpackungsbehältnisses ist das Verpackungsbehältnis ein Verpackungsbehältnis für ein Kosmetikprodukt, ein Körperpflegemittel, ein Lebensmittel, ein Haushaltsprodukt oder ein technisches Füllgut. Aufgrund seiner hohen chemischen Beständigkeit ist das erfindungsgemäße Verpackungsbehältnis in besonderem Maße für die Verpackung von Füllgütern aus den Bereichen Kosmetik, Körperpflege, Lebensmittel, Haushalt und Technik geeignet. Hierzu wird auf die Ausführungen im Zusammenhang mit der dritten Lehre verwiesen.

In einer bevorzugten Ausführungsform des erfindungsgemäßen Verpackungsbehältnisses ist das Verpackungsbehältnis eine Monoblockdose. Eine derartige Monoblockdose weist eine hohe chemische Beständigkeit insbesondere gegenüber aggressiven Füllgütern auf, ist jedoch frei von Formaldehyd, Bisphenol A (BPA), Polyvinylchlorid (PVC), Melamin, Polytetrafluorethylen (PTFE), Diacetonalkohol (DAA), Titandioxid (TiO₂) und Styrol. Zudem weist eine derartige Monoblockdose aufgrund des Magnesium-Anteils der Aluminiumlegierung vorteilhafte mechanische Eigenschaften auf. Ergänzend wird hierzu auf die Ausführungen im Zusammenhang mit der dritten Lehre verwiesen.

In einer bevorzugten Ausführungsform des erfindungsgemäßen Verpackungsbehältnisses umfasst das Verpackungsbehältnis einen Ventilteller, welcher aus einem Aluminiumlegierungsband gemäß der ersten Lehre hergestellt ist. Insbesondere handelt es sich bei einem solchen Verpackungsbehältnis um eine Monoblockdose. Die Vorteile eines derartigen Verpackungsbehältnisses ergeben sich dabei insbesondere aus den Vorteilen des Ventiltellers, welche bereits im Zusammenhang mit der ersten, dritten und vierten Lehre beschrieben wurden. Ergänzend wird hierzu auf die Ausführungen im Zusammenhang mit der ersten, dritten und vierten Lehre verwiesen.

Im Weiteren wird die Erfindung durch die Beschreibung von Ausführungsbeispielen in Verbindung mit der Zeichnung näher erläutert. Die Zeichnung zeigt in
- Fig. 1a, 1b: Ausführungsbeispiele von erfindungsgemäßen Aluminiumlegierungsbändern gemäß der ersten Lehre in einer schematischen Schnittansicht;
- Fig. 2a, 2b: ein Ausführungsbeispiel eines erfindungsgemäßen Verfahrens gemäß der zweiten Lehre in einer schematischen Darstellung;
- Fig. 3: beispielhaft ein erfindungsgemäßes Verpackungsbehältnis gemäß der fünften Lehre mit einem erfindungsgemäßen Teil eines Verpackungsbehältnisses gemäß der vierten Lehre in einer schematischen Darstellung.

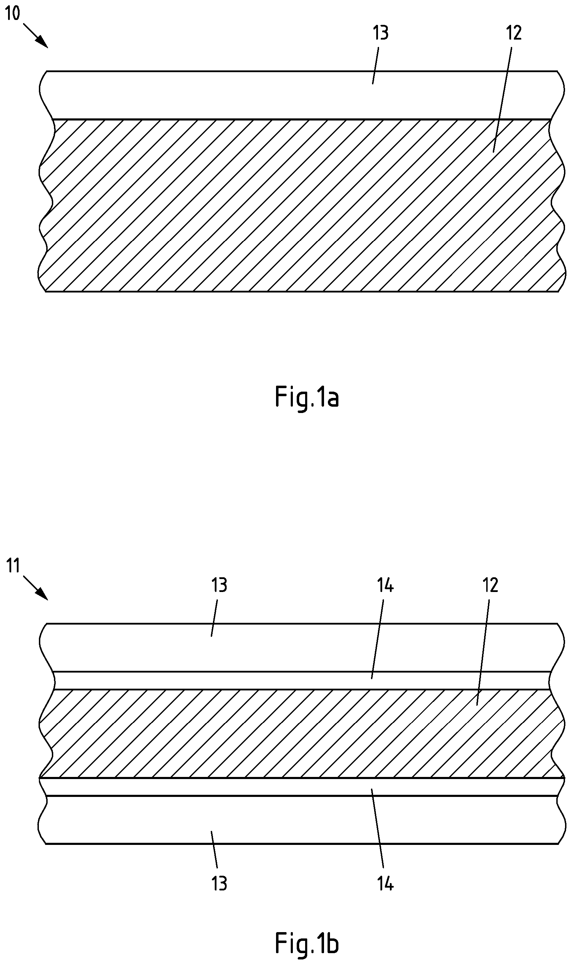

Die Fig. 1a und 1b zeigen jeweils ein Ausführungsbeispiel eines erfindungsgemäßen Aluminiumlegierungsbands 10, 11 in einer schematischen Schnittansicht. Fig. 1a zeigt hierzu zunächst ein Aluminiumlegierungsband 10 mit einer Metallschicht 12 und einer einseitig aufgebrachten Beschichtung 13, welche Polyolefin enthält. Die Polyolefin enthaltende Beschichtung 13 weist eine hohe chemische Beständigkeit auf, insbesondere gegenüber chemisch aggressiven Füllgütern, sodass sich das Aluminiumlegierungsband 10 besonders zur Herstellung von Verpackungsbehältnissen oder Teilen davon für Kosmetikprodukte, Körperpflegemittel, Lebensmittel, Haushaltsprodukte oder technische Füllgüter eignet. Daneben ist die Polyolefin enthaltende Beschichtung 13 auch in hohem Maße gesundheitsverträglich und insbesondere unproblematisch in Bezug auf die derzeit geltenden sowie in absehbarer Zeit eingeführten Vorgaben zum Gesundheitsschutz.

Die Metallschicht 12 des Aluminiumlegierungsbands 10 ist aus einer Aluminiumlegierung des Typs AA5xxx, hier beispielhaft des Typs AA5754, gefertigt, welche aufgrund ihres hohen Magnesiumanteils eine hohe Festigkeit aufweist und damit gut für die Herstellung von Verpackungsbehältnissen oder Teilen davon geeignet ist. Alternativ wäre jedoch auch eine Aluminiumlegierung des Typs AA3xxx denkbar. Ferner weist die Metallschicht 12 beispielhaft eine Dicke von 0,4 mm auf. Bei dieser Dicke kann unter anderem eine ausreichende Innendruckstabilität des Verpackungsbehältnisses oder Teils davon gewährleistet werden. Gleichzeitig werden das Gewicht des Verpackungsbehältnisses oder Teils davon sowie der Materialeinsatz für seine Herstellung auf ein sinnvolles Maß begrenzt.

Die Beschichtung 13 des Aluminiumlegierungsbands 10 weist bei Durchführung des beschleunigten zyklischen elektrochemischen Verfahrens gemäß EN ISO 17463 nach sechs Zyklen eine Impedanz von mindestens 40 kΩ bei einer Frequenz von 0,1 Hz auf, wobei das beschleunigte zyklische elektrochemische Verfahren in einer Versuchslösung mit einem pH-Wert von 12 durchgeführt wird. Bei Versuchslösungen mit einem pH-Wert zwischen 3,5 und 8,5 beträgt der entsprechende Wert der Impedanz mindestens 0,20 MΩ. Durch die genannten Impedanzen kann erreicht werden, dass die Haftungsbeständigkeit der Beschichtung 13 insbesondere mit Blick auf basische Umgebungen, aber auch mit Blick auf neutrale und saure Umgebungen, ausreichend hoch für die Herstellung von Verpackungsbehältnissen für Füllgüter aus dem Bereich Kosmetik, Körperpflege, Lebensmittel, Haushalt oder technische Füllgüter ist.

Die Beschichtung 13 des Aluminiumlegierungsbands 10 enthält beispielhaft Polypropylen als Polyolefin, sowie ferner PTFE-freies Wachs. Das Polypropylen ist unter Verwendung eines Hydroxyalkylamids, hier beispielhaft unter Verwendung von N,N,N',N'-Tetrakis(2-hydroxyethyl)adipamid, vernetzt. Infolge der Vernetzung verbessert sich die mechanische und chemische Beständigkeit der Polyolefin enthaltenden Beschichtung 13. In diesem Zusammenhang sind Hydroxyalkylamide aufgrund ihrer chemischen Eigenschaften gut als Vernetzungsmittel für Polyolefine geeignet. Zudem ist das hier beispielhaft verwendete N,N,N',N'-Tetrakis(2-hydroxyethyl)adipamid mit Blick auf den Gesundheitsschutz vorteilhaft, da bisher keine gesundheitsschädlichen Wirkungen dieses Stoffs bekannt sind. Das in der Polyolefin enthaltenden Beschichtung 13 ebenfalls enthaltene PTFE-freie Wachs erhöht die Oberflächenglätte der Beschichtung 13 und verbessert damit unter anderem die Stanzfähigkeit des Aluminiumlegierungsbands 10.

Das Flächengewicht der Polyolefin enthaltenden Beschichtung 13 liegt im Bereich zwischen 1,0 g/m² und 20,0 g/m², bevorzugt im Bereich zwischen 1,5 g/m² und 14,0 g/m², wodurch ein guter Kompromiss zwischen ausreichender chemischer Beständigkeit und niedrigem Materialeinsatz erreicht wird. Ferner weist die mit der Beschichtung 13 versehene Seite des Aluminiumlegierungsbands 10 in einer Schlagfalt-Prüfung eine Korrosionslinie von maximal 20 mm auf. Hierdurch kann eine hohe Verformbarkeit der Polyolefin enthaltenden Beschichtung 13 erreicht werden. Daneben weist die Polyolefin enthaltende Beschichtung 13 einen Gleitreibungskoeffizienten µ_{D} von maximal 0,1 auf, wodurch eine ausreichende Oberflächenglätte für einen Stanzprozess erreicht wird. Außerdem hält die Polyolefin enthaltende Beschichtung 13 im Vernetzungstest nach ASTM D4752 mindestens 100 Doppelhüben stand. Hiermit wird eine für Verpackungsbehältnisse oder Teile davon ausreichende Lösemittelbeständigkeit der Polyolefin enthaltenden Beschichtung 13 sichergestellt. Schließlich tritt kein Haftungsverlust der Polyolefin enthaltenden Beschichtung 13 auf, wenn das Aluminiumlegierungsband 10 einem Schnelltestverfahren unterzogen wird, in dem eine beschichtete Seite eines aus dem Aluminiumlegierungsband hergestellten Prüflings bei einer Temperatur von 60 °C bis 110 °C für eine Dauer von 18 h bis 30 h mit einem Kosmetikprodukt, einem Körperpflegemittel, einem Lebensmittel, einem Haushaltsprodukt oder einem technischen Füllgut als Testmedium in Kontakt gebracht wird. Dadurch kann erreicht werden, dass die Haftungsbeständigkeit der Polyolefin enthaltenden Beschichtung 13 ausreichend hoch für die Herstellung von Verpackungsbehältnissen für Füllgüter aus dem Bereich Kosmetik, Körperpflege, Lebensmittel, Haushalt oder technische Füllgüter ist.

Ein weiteres Ausführungsbeispiel eines erfindungsgemäßen Aluminiumlegierungsbands 11 ist in Fig. 1b ebenfalls in einer schematischen Schnittansicht gezeigt. Auch dieses Aluminiumlegierungsband 11 weist eine Metallschicht 12 sowie daneben auf beiden Seiten je eine Polyolefin enthaltende Beschichtung 13 auf. Bezüglich der Metallschicht 12 und den Polyolefin enthaltenden Beschichtungen 13 des Aluminiumlegierungsbands 11 gelten die obigen Ausführungen für das in Fig. 1a gezeigte Aluminiumlegierungsband 10 analog.

Anders als das Aluminiumlegierungsband 10 aus Fig. 1a ist das in Fig. 1b gezeigte Aluminiumlegierungsband 11 jedoch beidseitig mit einer Polyolefin enthaltenden Beschichtung 13 versehen. Bei einem aus dem Aluminiumlegierungsband 11 hergestellten Verpackungsbehältnis oder einem Teil davon dient eine Polyolefin enthaltende Beschichtung 13 auf der Innenseite des Verpackungsbehältnisses oder Teils davon vorwiegend dem Zweck, die chemische Beständigkeit auf der Innenseite sicherzustellen, wo das Füllgut typischerweise dauerhaft in Kontakt mit dem Verpackungsbehältnis oder Teil davon ist. Die Polyolefin enthaltende Beschichtung 13 auf der Außenseite des Verpackungsbehältnisses oder Teils davon stellt die chemische Beständigkeit hingegen auch auf der Außenseite bereit, wo ein Kontakt mit dem Füllgut beispielsweise bei der Entnahme durch einen Benutzer stattfinden kann.

Außerdem weist das in Fig. 1b dargestellte Aluminiumlegierungsband 11 zusätzlich zu der Metallschicht 12 und den beidseitigen Polyolefin enthaltenden Beschichtungen 13 auf beiden Seiten jeweils eine Konversionsschicht 14 auf. Die gezeigten beispielhaften Konversionsschichten 14 sind chromfrei, enthalten vorzugsweise Zirkoniumphosphat und sind unmittelbar auf der Metallschicht 12 angeordnet, sodass sie von den Polyolefin enthaltenden Beschichtungen 13 jeweils bedeckt werden. Die Konversionsschichten 14 bewirken neben einem Schutz gegen Korrosion insbesondere eine verbesserte Haftung der Polyolefin enthaltenden Beschichtungen 13. Da die Konversionsschichten 14 kein gesundheitsschädliches Chrom enthalten, sind sie vorteilhaft mit Blick auf den Gesundheitsschutz. Durch das vorzugsweise enthaltene Zirkoniumphosphat wird ferner eine besonders gute Haftung der Polyolefin enthaltenden Beschichtungen 13 erreicht.

Grundsätzlich können auf den in Fig. 1a und 1b dargestellten Aluminiumlegierungsbändern 10, 11 auch noch weitere Schichten vorhanden sein. Beispielsweise könnte das Aluminiumlegierungsband 11 aus Fig. 1b auf einer Seite, welche einer Innenseite eines Verpackungsbehältnisses oder eines Teils davon entspricht, eine mittels Heißsiegeln oder Kaschieren aufgebrachte Polymerschicht, vorzugsweise eine Polypropylenfolie, als Barriereschicht und/oder zur Verbesserung der Innendruckstabilität des Verpackungsbehältnisses oder Teils davon aufweisen.

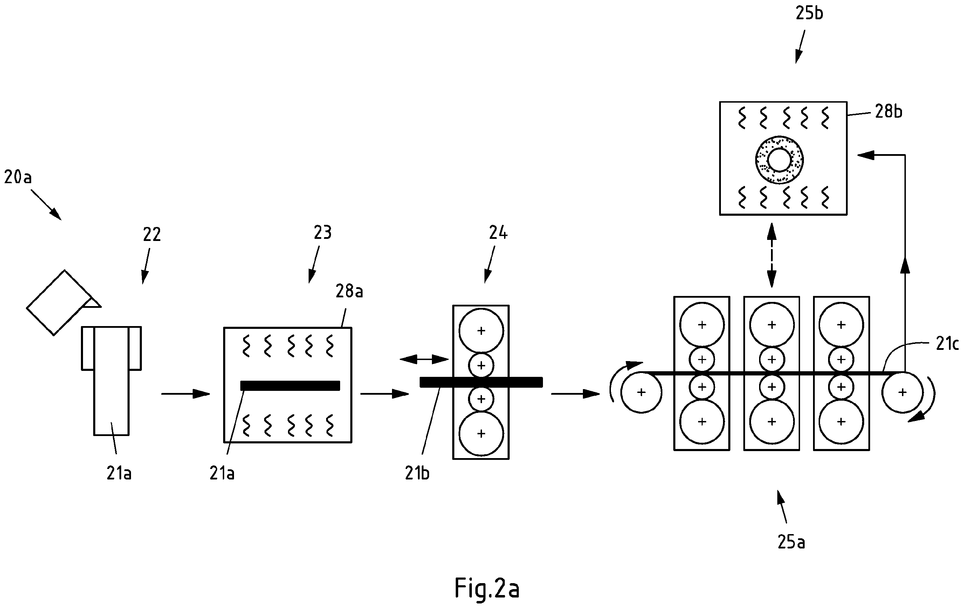

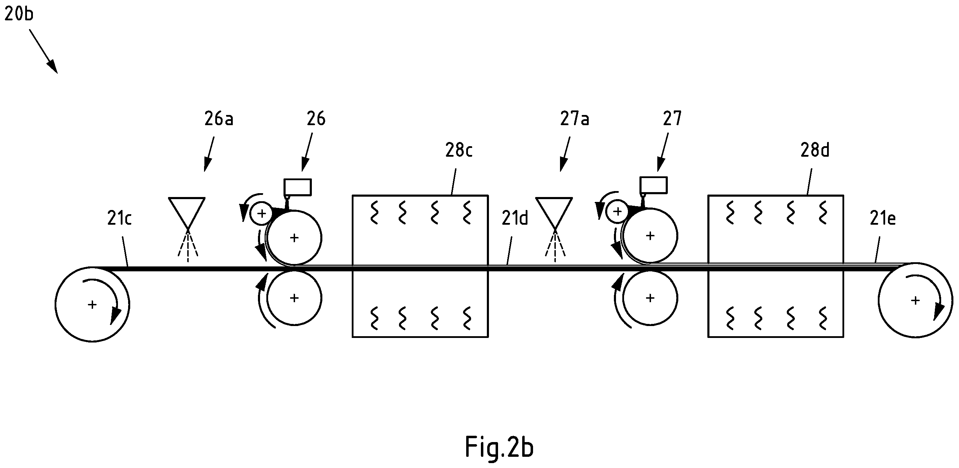

Fig. 2a und 2b zeigen nun in einer schematischen Ansicht ein Ausführungsbeispiel eines erfindungsgemäßen Verfahrens zur Herstellung eines Aluminiumlegierungsbands, insbesondere zur Herstellung eines erfindungsgemäßen Aluminiumlegierungsbands. Fig. 2a zeigt hierzu die Verfahrensschritte 20a vom Gießen des Walzbarrens bis einschließlich zum Kaltwalzen des Warmbands an Enddicke. Fig. 2b zeigt die Verfahrensschritte 20b zur Beschichtung des Aluminiumlegierungsbandes im Anschluss an das Kaltwalzen.

Zunächst wird im Schritt 22 ein Walzbarren 21a aus einer Aluminiumlegierung des Typs 5xxx hergestellt. Die Herstellung des Walzbarrens 21a erfolgt wie hier schematisch dargestellt beispielsweise im diskontinuierlichen Direct Chill (DC) Gussverfahren. Alternativ können jedoch auch andere Gussverfahren, wie insbesondere das kontinuierliche Bandgießen (nicht dargestellt), eingesetzt werden. Nach dem Gießen wird der Walzbarren 21a im Schritt 23 unter Verwendung eines Homogenisierungsofens 28a homogenisiert. Anschließend erfolgt im Schritt 24 das Warmwalzen des Walzbarrens 21a zu einem Warmband 21b. Das Warmwalzen 24 kann in reversierenden Gerüsten (wie dargestellt) und/oder in Tandemgerüsten mit Mehrfachstichen (nicht dargestellt) erfolgen. Danach wird das Warmband 21b im Schritt 25a zu einem Kaltband 21c an Enddicke kaltgewalzt. Während des Kaltwalzens 25a kann mindestens eine optionale Zwischenglühung 25b, hier exemplarisch unter Verwendung eines Kammerofens 28b, alternativ auch unter Verwendung eines Durchlaufofens (nicht dargestellt), durchgeführt werden. Durch die mindestens eine optionale Zwischenglühung 25b wird eine Entfestigung des Kaltbands 21c erreicht. Folglich können im Anschluss an die mindestens eine optionale Zwischenglühung 25b weitere Kaltwalzschritte 25a durchgeführt werden, bis das Kaltband 21c die Enddicke von hier exemplarisch 0,4 mm erreicht hat. Auch eine abschließende Wärmebehandlung ist möglich, welche ebenfalls dazu dient, das Kaltband 21c zu entfestigen, um es gegebenenfalls besser weiterverarbeiten zu können. Hierzu wird das Kaltband mit Enddicke beispielsweise im Coil einer Wärmebehandlung, beispielsweise in einem Kammerofen, unterzogen.

Die Verfahrensschritte 20b, die im Anschluss an das Kaltwalzen 25a durchgeführt werden, sind in Fig. 2b gezeigt. Ausgangspunkt hierfür ist das kaltgewalzte und optional abschließend wärmebehandelte Kaltband 21c. Dieses wird, wie nachfolgend beschrieben, zunächst mit einer optionalen Konversionsschicht und anschließend mit einer Polyolefin enthaltenden Beschichtung versehen. Die optionale Konversionsschicht und die Polyolefin enthaltende Beschichtung werden in diesem Beispiel auf einer Seite erzeugt, was allerdings lediglich exemplarisch zu verstehen ist. Genauso könnten Konversionsschichten und/oder Polyolefin enthaltende Beschichtungen auch auf beiden Seiten des Kaltbands 21c erzeugt werden. Ebenso ist das Aufbringen der Konversionsschicht beispielhaft zu verstehen und grundsätzlich kann die Konversionsschicht auf einer Seite oder auf beiden Seiten entfallen.

Zum Erzeugen der Konversionsschicht wird das Kaltband 21c von einem Coil abgewickelt und beispielsweise einem Phosphatierungsschritt 26 zugeführt, welcher hier als einseitiges Roll-Coating-Verfahren ausgestaltet ist. Alternativ kann auch ein Aufsprühen der Phosphatierungslösung, beispielsweise ein elektrostatisches Aufsprühen 26a erfolgen. Ferner kann die Phosphatierung auch durchgeführt werden, indem das Kaltband 21c ein Bad mit der Phosphatierungslösung durchläuft (nicht dargestellt). Das Roll-Coating-Verfahren weist jedoch den Vorteil auf, dass auch bei hohen Durchlaufgeschwindigkeiten der Auftrag der Phosphatierungslösung präzise eingestellt werden kann. Bei der Phosphatierung 26 handelt es sich um ein bevorzugtes No-Rinse-Verfahren, bei dem das Phosphatierungsmittel, hier Zirkoniumphosphat, auf dem Kaltband 21c verbleibt, sodass insbesondere kein Spülschritt erforderlich ist. Hierzu wird das mit der Phosphatierungslösung versehene Kaltband 21c durch den Trocknungsofen 28c geführt, sodass das Phosphatierungsmittel eintrocknet. Wie bereits oben beschrieben ist der Phosphatierungsschritt 26 für die Realisierung eines erfindungsgemäßen Verfahrens nicht zwingend erforderlich. Jedoch kann mit einem einseitigen oder beidseitigen Phosphatierungsschritt 26 eine Konversionsschicht auf einer Seite oder auf beiden Seiten des Kaltbands 21d erzeugt werden, welche nicht nur vor Korrosion schützt, sondern insbesondere die Haftung der im Anschluss aufgebrachten Polyolefin enthaltenden Beschichtung verbessert. Vorzugsweise erfolgt eine chromfreie Phosphatierung 26, sodass die erzeugten Konversionsschichten kein gesundheitsschädliches Chrom enthalten.

Im Verfahrensschritt 27 wird schließlich eine Polyolefin enthaltende Beschichtung auf dem Kaltband 21d, welches hier exemplarisch bereits mit einer Konversionsschicht versehen ist, erzeugt. Das Erzeugen der Polyolefin enthaltenden Beschichtung erfolgt hier beispielhaft, indem ein wasserbasierter Lack auf das Kaltband 21d aufgebracht und anschließend eingebrannt wird. Der Lack enthält exemplarisch eine Polypropylen-Disperion als Polyolefin-Dispersion. Daneben enthält der Lack beispielhaft N,N,N',N'-Tetrakis(2-hydroxyethyl)adipamid als Vernetzungsmittel sowie PTFE-freies Wachs. Das Aufbringen des Lacks erfolgt, wie bereits die Phosphatierung 26, ebenfalls in einem einseitigen Roll-Coating-Verfahren. Auch hier ist alternativ ein Aufsprühen, insbesondere ein elektrostatisches Aufsprühen 27a des Lacks, oder als weitere Alternative das Durchlaufen eines Lackbads (nicht dargestellt), möglich. Zum Einbrennen des Lacks wird das einseitig mit dem Lack beschichtete Kaltband 21d einem Einbrennofen 28d zugeführt. Dabei erfolgt das Einbrennen derart, dass eine maximale Metalltemperatur zwischen 200 °C und 300 °C erreicht wird. Die Einbrenndauer liegt exemplarisch zwischen 5 s und 35 s. Resultat des Einbrennens ist das einseitig mit einer Polyolefin enthaltenden Beschichtung versehene Kaltband 21e. Dieses wird schließlich auf ein Coil aufgewickelt, um es einfacher lagern oder transportieren zu können.

Das erfindungsgemäße Aluminiumlegierungsband, welches beispielsweise mit dem soeben beschriebenen erfindungsgemäßen Verfahren hergestellt wurde, kann nun insbesondere zur Herstellung eines Verpackungsbehältnisses oder eines Teils davon verwendet werden. Bevorzugt kann das erfindungsgemäße Aluminiumlegierungsband zur Herstellung einer Monoblockdose oder eines Ventiltellers für eine Monoblockdose verwendet werden. Aufgrund seiner hohen chemischen Beständigkeit, welche durch die Polyolefin enthaltende Beschichtung bereitgestellt wird, eignet sich das erfindungsgemäße Aluminiumlegierungsband in besonderem Maße für die Herstellung eines Verpackungsbehältnisses oder eines Teils eines Verpackungsbehältnisses für ein Kosmetikprodukt, ein Körperpflegemittel, ein Lebensmittel, ein Haushaltsprodukt oder ein technisches Füllgut. Die Herstellung eines entsprechenden Verpackungsbehältnisses oder eines Teils davon erfolgt beispielsweise dadurch, dass eine entsprechende Form aus dem erfindungsgemäßen Aluminiumlegierungsband mittels geeigneter Werkzeuge ausgestanzt und anschließend, falls erforderlich, umgeformt und zugeschnitten wird. Mehrere Teile können dann beispielsweise zu einem Verpackungsbehältnis zusammengesetzt und/oder verbunden werden.

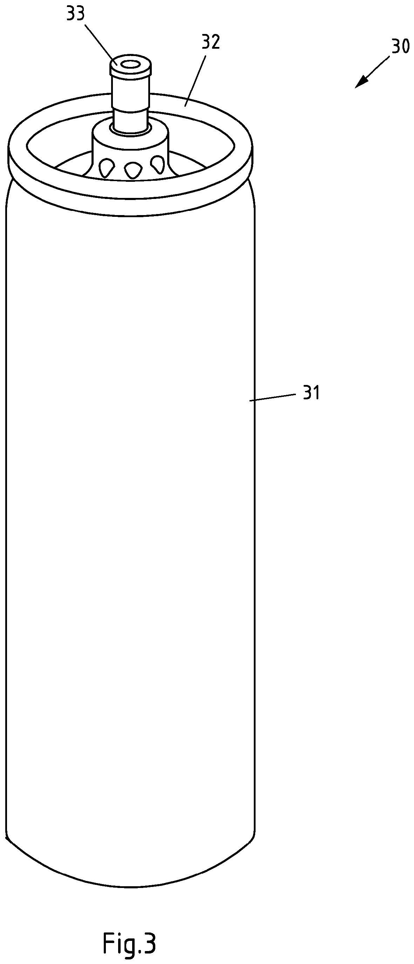

Fig. 3 zeigt beispielhaft in einer schematischen Darstellung ein erfindungsgemäßes Verpackungsbehältnis 30 in Form einer Monoblockdose 30 mit einem erfindungsgemäßen Teil 32 eines Verpackungsbehältnisses ins Form eines Ventiltellers 32. Die Monoblockdose 30 weist neben dem Ventilteller 32 auch einen Dosenkörper 31 auf, der mit dem Ventilteller 32 über eine Bördelung luftdicht verbunden wurde. Anstelle der Bördelung sind auch andere geeignete Verbindungsmethoden, wie beispielsweise eine Klebeverbindung, denkbar. Sowohl der Dosenkörper 31 als auch der Ventilteller 32 sind hier exemplarisch durch die soeben beschriebene erfindungsgemäße Verwendung des erfindungsgemäßen Aluminiumlegierungsbands hergestellt. Es sind jedoch auch Monoblockdosen 30 denkbar, bei denen lediglich ein Teil, insbesondere der Ventilteller 32, durch die erfindungsgemäße Verwendung des erfindungsgemäßen Aluminiumlegierungsbands hergestellt ist. Der Dosenkörper 31 ist in dem hier gezeigten Beispiel einteilig ausgeführt, kann jedoch grundsätzlich auch mehrteilig, insbesondere zweiteilig ausgeführt sein. Ferner weist der Ventilteller 32 eine Öffnung auf, in der sich hier beispielhaft ein Ventil 33 zur Entnahme eines Füllguts befindet. Schließlich weisen der Dosenkörper 31 sowie der Ventilteller 32 hier exemplarisch eine beidseitige Beschichtung auf, welche Polyolefin enthält, wobei die Beschichtung bei Durchführung des beschleunigten zyklischen elektrochemischen Verfahrens gemäß EN ISO 17463 nach sechs Zyklen eine Impedanz von mindestens 40 kΩ bei einer Frequenz von 0,1 Hz aufweist, wobei das beschleunigte zyklische elektrochemische Verfahren in einer Versuchslösung mit einem pH-Wert von 12 durchgeführt wird. Dadurch weist die Monoblockdose 30 sowohl auf ihrer Innenseite als auch auf ihrer Außenseite eine hohe chemische Beständigkeit, insbesondere gegenüber chemisch aggressiven Füllgütern wie beispielsweise Kosmetikprodukte, Körperpflegemittel, Lebensmittel, Haushaltsprodukte oder technische Füllguter, und insbesondere mit Blick auf basische Umgebungen, auf. Prinzipiell wäre jedoch auch eine einseitige Beschichtung der Innenseite des Dosenkörpers 31 oder des Ventiltellers 32 denkbar.

Im Rahmen der vorliegenden Erfindung wurde auch ein einseitig beschichtetes Aluminiumlegierungsband zu Versuchszwecken hergestellt, um die Haftungsbeständigkeit der Polyolefin enthaltenden Beschichtung des erfindungsgemäßen Aluminiumlegierungsbands mittels des beschleunigten zyklischen elektrochemischen Verfahrens gemäß EN ISO 17463 zu untersuchen.

Das Aluminiumlegierungsband wurde zu diesem Zweck zunächst durch die in Zusammenhang mit Fig. 2a beschriebenen Verfahrensschritte, nämlich Gießen eines Walzbarrens, Homogenisieren des Walzbarrens, Warmwalzen des Walzbarrens zu einem Warmband und Kaltwalzen des Warmbands an Enddicke mit optionaler Zwischenglühung, hergestellt. Die Metalldicke des Aluminiumlegierungsbands betrug 0,41 mm.

Anschließend wurde das Aluminiumlegierungsband durch die in Zusammenhang mit Fig. 2b beschriebenen Verfahrensschritte einseitig beschichtet. Hierzu wurde das Aluminiumlegierungsband als Vorbehandlung einer einseitigen chromfreien Phosphatierung unter Verwendung von Zirkoniumphosphat unterzogen, um eine entsprechende Konversionsschicht auf dem Aluminiumlegierungsband zu erzeugen. Zur Erzeugung der Polyolefin enthaltenden Schicht wurde ein wasserbasierter Lack auf die erzeugte Konversionsschicht des Aluminiumlegierungsbands aufgetragen. Der wasserbasierte Lack enthielt 2 bis 6 Gew.-% einer wässrigen Lösung eines Hydroxyalkylamids, 5 bis 11 Gew.-% PTFE-freies Wachs und als Rest eine wässrige Polyolefin-Dispersion. Bei der wässrigen Polyolefin-Dispersion handelte es sich beispielhaft um eine wässrige Polypropylen-Dispersion mit einem Feststoffanteil von 40 bis 50 Gew.-%. Bei der wässrigen Lösung eines Hydroxyalkylamids handelte es sich um eine Lösung von 30 Gew.-% N,N,N',N'-Tetrakis(2-hydroxyethyl)adipamid in schwach basischem Wasser, welches 0,3 Gew.-% DMEA enthielt. Der aufgetragene Lack wurde bei einer maximalen Metalltemperatur von 232 °C eingebrannt.

Aus dem einseitig beschichteten Aluminiumlegierungsband wurden anschließend fünf Ventilteller als Prüflinge für das beschleunigte zyklische elektrochemische Verfahren ausgestanzt. Zur Simulation realer Füllgüter wurde das beschleunigte zyklische elektrochemische Verfahren in insgesamt fünf Versuchslösungen durchgeführt, welche pH-Werte von 3,5, 5,5, 6,8, 8,5 und 12 aufwiesen. Dabei diente die Versuchslösung mit dem pH-Wert von 12 der Simulation eines basischen Füllguts. Die Versuchslösung mit dem pH-Wert von 8,5 diente der Simulation eines schwach basischen Füllguts. Die Versuchslösung mit dem pH-Wert von 6,8 diente der Simulation eines neutralen Füllguts. Die Versuchslösung mit dem pH-Wert von 5,5 diente der Simulation eines schwach sauren Füllguts. Die Versuchslösung mit dem pH-Wert von 3,5 diente der Simulation eines sauren Füllguts. Je einer der fünf Ventilteller wurde in je einer der fünf Versuchslösungen untersucht. Die Durchführung des beschleunigten zyklischen elektrochemischen Verfahrens erfolgte dabei gemäß EN ISO 17463. Insgesamt wurden sechs Zyklen durchgeführt. Die Impedanzmessungen wurden bei einer Frequenz von 0,1 Hz und mit einer Amplitude von 12,5 mV durchgeführt. Für jede kathodische Polarisation wurde ein Potential U_{POL}, welches jeweils um 2 V unterhalb des aktuellen Ruhepotentials U_{OCP} lag, für eine Dauer von 20 min angelegt. Die Dauer der anschließenden Wartephase betrug jeweils 180 min. In der nachfolgenden Tab. 1 sind für jeden der fünf Ventilteller, und damit für jede der fünf Versuchslösungen mit pH-Werten zwischen 3,5 und 12, die am Ende des sechsten Zyklus jeweils gemessenen Impedanzen der einseitigen Beschichtungen aufgeführt.

**Tabelle 1:**

| Versuch Nr. | pH-Wert der Versuchslösung | Impedanz nach sechs Zyklen |
|---|---|---|
| 1 | 12 | 65 kΩ |
| 2 | 8,5 | 0,22 MΩ |
| 3 | 6,8 | 0,90 MΩ |
| 4 | 5,5 | 2,2 MΩ |
| 5 | 3,5 | 28 MΩ |

Wie die Tabelle zeigt, weist die erzeugte Beschichtung unabhängig vom pH-Wert der Versuchslösung nach dem sechsten Zyklus stets eine Impedanz von mindestens 10 kΩ bei 0,1 Hz auf. Wie eingangs erwähnt korreliert ein solcher Wert allgemein mit einer hinreichenden Haftungsbeständigkeit der Beschichtung in einem entsprechenden Packtest, während eine Impedanz von weniger als 10 kΩ mit einer nicht mehr akzeptablen Haftungsbeständigkeit korreliert. Folglich kann für die erzeugte Beschichtung eine Haftungsbeständigkeit erreicht werden, welche bei pH-Werten im gesamten Bereich zwischen 3,5 und 12 ausreichend hoch für die Herstellung von Verpackungsbehältnissen für Füllgüter aus dem Bereich Kosmetik, Körperpflege, Lebensmittel, Haushalt oder technische Füllgüter ist. Insbesondere mit Blick auf basische Füllgüter, wo eine hohe Haftungsbeständigkeit der Beschichtung in der Regel schwierig zu realisieren ist, zeigt der Versuch Nr. 1 mit einem pH-Wert der Versuchslösung von 12 und einer gemessenen Impedanz von 65 kΩ zudem, dass der Impedanz-Grenzwert von 10 kΩ bereits deutlich übertroffen wird. Ein Vergleichsversuch, in dem anstelle der erfindungsgemäßen Polyolefin enthaltenden Beschichtung ein anderes BPA-freies Einschichtsystem verwendet wurde, lieferte mit einem pH-Wert der Versuchslösung von 12 lediglich eine nach sechs Zyklen gemessene Impedanz von 14 kΩ. Doch auch in den Versuchen Nr. 2 bis 5 mit pH-Werten zwischen 3,5 und 8,5 liegt die gemessene Impedanz stets bei mindestens 0,20 MΩ, also weit oberhalb des Grenzwerts von 10 kΩ, und die gemessene Impedanz steigt mit abnehmendem pH-Wert sogar an. Mit den hier ermittelten hohen Haftungsbeständigkeiten geht auch eine verbesserte chemische Beständigkeit des erfindungsgemäßen Aluminiumlegierungsbands einher, sodass sich letzteres besonders gut für die Herstellung von Verpackungsbehältnissen oder Teilen davon eignet, insbesondere wenn das Verpackungsbehältnis für ein chemisch aggressives Füllgut bestimmt ist.

Im Rahmen der vorliegenden Erfindung wurde auch ein beidseitig beschichtetes Aluminiumlegierungsband zu Versuchszwecken hergestellt, um weitere Eigenschaften der Polyolefin enthaltenden Beschichtungen zu überprüfen. Das beidseitig beschichtete Aluminiumlegierungsband wurde, wie auch bereits das soeben in Zusammenhang mit Tab. 1 beschriebene einseitig beschichtete Aluminiumlegierungsband, durch die in Zusammenhang mit Fig. 2a und 2b beschriebenen Verfahrensschritte hergestellt. Der dabei verwendete wasserbasierte Lack war identisch und enthielt dementsprechend 2 bis 6 Gew.-% einer wässrigen Lösung eines Hydroxyalkylamids, 5 bis 11 Gew.-% PTFE-freies Wachs und als Rest eine wässrige Polyolefin-Dispersion. Beim beidseitigen Auftragen des wasserbasierten Lacks auf die beidseitig erzeugten Konversionsschichten des Aluminiumlegierungsbands betrug der Zielwert des Flächengewichts der resultieren Beschichtungen auf der Oberseite des Aluminiumlegierungsbands 3,5 g/m² und auf der Unterseite 10,5 g/m².

An dem auf diese Weise hergestellten beidseitig beschichteten Aluminiumlegierungsband wurden schließlich verschiedene Messungen durchgeführt, um diverse Eigenschaften der Polyolefin enthaltenden Beschichtungen sowohl für die Oberseite als auch für die Unterseite zu bestimmen. Im Einzelnen wurden jeweils eine Schlagfalt-Prüfung zur Bestimmung der Korrosionslinie sowie eine Messung des Gleitreibungskoeffizienten µ_{D} durchgeführt. Ferner wurde jeweils ermittelt, ob die Beschichtung im Vernetzungstest nach ASTM D4752 bei einem Anpressdruck von 0,01 MPa mindestens 100 Doppelhüben standhält. Die hieraus erhaltenen Ergebnisse sind in der nachfolgenden Tab. 2 gezeigt.

**Tabelle 2:**

| Beschichtung | Oberseite | Unterseite |
|---|---|---|
| Flächengewicht | 3,4 g/m² | 10,4 g/m² |
| Korrosionslinie (Schlagfalt-Prüfung) | >100 mm | 10 mm |
| Gleitreibungskoeffizient | 0,06 | 0,075 |
| 100 Doppelhübe (Vernetzungstest) | ja | ja |

Schließlich wurden im Rahmen der vorliegenden Erfindung weitere Versuche durchgeführt, um die Haftungsbeständigkeit der Polyolefin enthaltenden Beschichtung des erfindungsgemäßen Aluminiumlegierungsbands zu untersuchen. Hierzu wurden insgesamt drei Versuchsreihen mit 19 verschiedenen Füllgütern aus den Bereichen Kosmetik und Körperpflege durchgeführt. Bei den Füllgütern handelte es sich im Einzelnen um sechs Sonnenschutzmittel, vier Deodorants, zwei Duschschäume, ein Haarspray, vier Haarfestiger und zwei Rasierschäume. Aufgrund der Vielzahl von untersuchten Füllgütern konnte die Haftungsbeständigkeit der Polyolefin enthaltenden Beschichtung des erfindungsgemäßen Aluminiumlegierungsbands in Umgebungen mit unterschiedlichen pH-Werten untersucht werden.

In einer ersten Versuchsreihe wurden konventionelle Packtests zur Überprüfung der Haftungsbeständigkeit durchgeführt. Hierzu wurden insgesamt 95 Monoblockdosen hergestellt, welche jeweils einen Ventilteller aus einem erfindungsgemäßen Aluminiumlegierungsband umfassten. Zur Erzeugung der Polyolefin enthaltenden Beschichtung des erfindungsgemäßen Aluminiumlegierungsbands wurde dabei der oben beschriebene wasserbasierte Lack mit 2 bis 6 Gew.-% einer wässrigen Lösung eines Hydroxyalkylamids, 5 bis 11 Gew.-% PTFE-freiem Wachs und als Rest einer wässrigen Polyolefin-Dispersion verwendet. Jeweils fünf der auf diese Weise hergestellten Monoblockdosen wurden mit je einem der 19 soeben genannten Füllgüter sowie mit Treibmittel befüllt. Alle 95 Monoblockdosen wurden für 6 bis 9 Monate bei 45 °C gelagert. Anschließend wurden die Monoblockdosen unter Verwendung eines Schneidwerkzeugs geöffnet.

Danach wurde mittels einer Sichtprüfung untersucht, ob ein Haftungsverlust der Polyolefin enthaltenden Beschichtungen auf den Innenseiten der Ventilteller, aufgetreten war. Es stellte sich hierbei heraus, dass ein solcher Haftungsverlust bei keiner der untersuchten Monoblockdosen erfolgt war. Bei Vergleichsversuchen, in denen anstelle der erfindungsgemäßen Polyolefin enthaltenden Beschichtung andere BPA-freie Einschichtsysteme verwendet wurden, traten hingegen in mehreren Fällen Haftungsverluste in Form von Bläschenbildung bis hin zu einem großflächigen Ablösen der Beschichtung auf den Innenseiten der Ventilteller auf. Dieses Ergebnis zeigt bereits, dass die Haftungsbeständigkeit der Polyolefin enthaltenden Beschichtung des erfindungsgemäßen Aluminiumlegierungsbands ausreichend hoch für die Herstellung von Verpackungsbehältnissen oder Teilen davon für Füllgüter aus dem Bereich Kosmetik und Körperpflege ist. Ferner kann aufgrund dieser Ergebnisse davon ausgegangen werden, dass eine ausreichend hohe Haftungsbeständigkeit auch bei Füllgütern aus den Bereichen Lebensmittel und Haushalt oder bei technischen Füllgütern besteht, da diese ähnliche chemische Eigenschaften aufweisen.

In einer zweiten Versuchsreihe wurde die Haftungsbeständigkeit anstelle von konventionellen Packtests mit einer ersten Variante eines Schnelltestverfahrens untersucht, welches im Rahmen der Erfindung entwickelt wurde. Hierzu wurden weitere 95 Monoblockdosen als Prüflinge für das Schnelltestverfahren hergestellt, welche ebenfalls jeweils einen Ventilteller aus einem erfindungsgemäßen Aluminiumlegierungsband umfassten. Auch hier wurde zur Erzeugung der Polyolefin enthaltenden Beschichtung des erfindungsgemäßen Aluminiumlegierungsbands der wasserbasierte Lack mit 2 bis 6 Gew.-% einer wässrigen Lösung eines Hydroxyalkylamids, 5 bis 11 Gew.-% PTFE-freiem Wachs und als Rest einer wässrigen Polyolefin-Dispersion verwendet. Erneut wurden jeweils fünf Monoblockdosen mit einem der oben genannten 19 Füllgüter aus den Bereichen Kosmetik und Körperpflege sowie mit Treibmittel befüllt. In dieser Variante des Schnelltestverfahrens wurden je fünf Monoblockdosen, welche dasselbe Füllgut enthielten, nebeneinander mit dem Ventil nach unten in ein zylindrisches Testgefäß gestellt. Auf der Innenseite der Ventilteller war das jeweilige Testmedium, d.h. das jeweilige Füllgut, daher in Kontakt mit der Polyolefin enthalten Beschichtung. Das Testgefäß wurde anschließend bis mindestens zur halben Höhe mit Wasser befüllt, sodass insbesondere die Ventile vollständig von Wasser umgeben waren. Nach dem Befüllen wurde das Testgefäß mit einem Deckel luftdicht verschlossen. Das Testgefäß und der Deckel wurden zu diesem Zweck mittels einer Flanschverbindung miteinander verbunden. Danach wurde das luftdicht verschlossene Testgefäß in einen Autoklaven gestellt und dort für 24 h bei 80 °C bis 90 °C gelagert. Auf diese Weise wurde sichergestellt, dass eventuell austretendes Gas aus dem System nicht in die Laborumgebung gelangen konnte. Nach Ablauf der Lagerdauer von 24 h wurde das Testgefäß aus dem Autoklaven entnommen und etwa 1 h bei Umgebungsbedingungen abgekühlt. Nach dem Abkühlen wurde ein Ventil, welches am Deckel des Testgefäßes angebracht war, geöffnet, sodass ein im Testgefäß gegebenenfalls vorhandener Überdruck entweichen konnte. Anschließend wurde der Deckel geöffnet und die Monoblockdosen wurden aus dem Testgefäß entnommen. Schließlich wurden die Monoblockdosen mit einem Schneidwerkzeug geöffnet und die Ventilteller wurden mit Leitungswasser gewaschen, an Luft für mindestens 2 h getrocknet und danach einer Sichtprüfung unterzogen. Auf diese Weise wurde für jedes der 19 Testmedien verfahren.

Insgesamt stellte sich bei der zweiten Versuchsreihe erneut heraus, dass bei keiner der untersuchten Monoblockdosen ein Haftungsverlust der Polyolefin enthaltenden Beschichtung auf der Innenseite des Ventiltellers aufgetreten war. Bei Vergleichsversuchen mit anderen BPA-freien Einschichtsystemen traten hingegen wiederum in mehreren Fällen Haftungsverluste in Form von Bläschenbildung bis hin zu einem großflächigen Ablösen der Beschichtung auf.

Beim Vergleich der Ergebnisse der konventionellen Packtests mit der ersten Variante des Schnelltestverfahrens ergab sich, dass die jeweiligen Ergebnisse in 85 % der Fälle übereinstimmten. Somit konnte gezeigt werden, dass das Schnelltestverfahren im Wesentlichen identische Ergebnisse in Bezug auf die Haftungsbeständigkeit liefert wie konventionelle Packtests. Es ist anzunehmen, dass ein Kontakt der Beschichtung mit dem Testmedium bei 80 °C bis 90 °C für 24 h denselben Effekt hinsichtlich eines möglichen Haftungsverlusts hat wie ein Kontakt bei 45 °C für 6 bis 9 Monate. Folglich lässt sich die Prüfung der Haftungsbeständigkeit mit dem Schnelltestverfahren ohne wesentliche Einbußen in der Verlässlichkeit des Testergebnisses in nur 1 bis 2 Tagen, und somit deutlich schneller als mit den bisherigen Packtests, durchführen.

Die Ergebnisse der ersten Variante des Schnelltests, welche wie soeben beschrieben weitgehend mit den Ergebnissen der konventionellen Packtests übereinstimmen, zeigen damit erneut, dass die Haftungsbeständigkeit der Polyolefin enthaltenden Beschichtung des erfindungsgemäßen Aluminiumlegierungsbands ausreichend hoch für die Herstellung von Verpackungsbehältnissen oder Teilen davon für Füllgüter aus dem Bereich Kosmetik und Körperpflege ist. Ferner kann aufgrund dieser Ergebnisse auch von einer ausreichend hohen Haftungsbeständigkeit bei Füllgütern aus den Bereichen Lebensmittel und Haushalt oder bei technischen Füllgütern ausgegangen werden, da diese ähnliche chemische Eigenschaften aufweisen. Entsprechende Versuche mittels der hier beschriebenen ersten Variante des Schnelltestverfahrens hätten ebenso auch mit solchen Füllgütern durchgeführt werden können.

In einer dritten Versuchsreihe wurde die Haftungsbeständigkeit schließlich noch mit einer zweiten Variante des im Rahmen der Erfindung entwickelten Schnelltestverfahrens untersucht. Hierzu wurden tiefgezogene Näpfchen mit einer umlaufenden Doppelsicke von 0,8 mm, die aus dem erfindungsgemäßen Aluminiumlegierungsband hergestellt worden waren, anstelle von Monoblockdosen als Prüflinge verwendet. Die genannten Näpfchen sind hierbei exemplarisch zu verstehen und ebenso hätten beispielsweise Ventilteller oder Blechabschnitte als Prüflinge verwendet werden können. Insgesamt wurden 95 Näpfchen aus einem erfindungsgemäßen Aluminiumlegierungsband mittels Tiefziehen hergestellt und anschließend mit einer umlaufenden Doppelsicke von 0,8 mm versehen. Erneut wurde zur Erzeugung der Polyolefin enthaltenden Beschichtung des erfindungsgemäßen Aluminiumlegierungsbands der wasserbasierte Lack mit 2 bis 6 Gew.-% einer wässrigen Lösung eines Hydroxyalkylamids, 5 bis 11 Gew.-% PTFE-freiem Wachs und als Rest einer wässrigen Polyolefin-Dispersion verwendet. In dieser Variante des Schnelltestverfahrens wurden jeweils fünf Näpfchen zusammen mit je einem der oben genannten 19 Füllgüter aus den Bereichen Kosmetik und Körperpflege als Testmedium in das Testgefäß eingebracht. Dabei war die eingefüllte Menge des Testmediums so groß, dass die Näpfchen vollständig von dem Testmedium umgeben waren. Somit war das Testmedium auch in dieser Variante des Schnelltestverfahrens in Kontakt mit der Polyolefin enthalten Beschichtung der Näpfchen. Anders als bei der ersten Variante des Schnelltestverfahrens wurde jedoch hier kein Treibmittel verwendet. Nach dem Befüllen des Testgefäßes wurde dieses mit dem Deckel wiederum unter Einsatz der Flanschverbindung luftdicht verschlossen. Danach wurde das luftdicht verschlossene Testgefäß in einen Trockenschrank gestellt und dort für 24 h bei 80 °C bis 90 °C gelagert. Nach Ablauf dieser Zeit wurde das Testgefäß aus dem Trockenschrank entnommen und etwa 1 h bei Umgebungsbedingungen abgekühlt. Anschließend wurden das am Deckel des Testgefäßes angebrachte Ventil geöffnet und der Deckel abgenommen. Die Näpfchen wurden aus dem Testgefäß entnommen, mit Leitungswasser gewaschen, an Luft für mindestens 2 h getrocknet und danach einer Sichtprüfung unterzogen. Auf diese Weise wurde für jedes der 19 Testmedien verfahren.

Auch bei der dritten Versuchsreihe stellte sich insgesamt heraus, dass bei keinem der untersuchten Prüflinge ein Haftungsverlust aufgetreten war. Bei Vergleichsversuchen mit anderen BPA-freien Einschichtsystemen traten hingegen wiederum in mehreren Fällen Haftungsverluste in Form von Bläschenbildung, insbesondere im Bereich der Doppelsicke der Näpfchen, bis hin zu einem großflächigen Ablösen der Beschichtung auf.

Beim Vergleich der Ergebnisse der beiden Varianten des Schnelltestverfahrens ergab sich, dass beide Varianten praktisch identische Ergebnisse lieferten. Folglich konnte gezeigt werden, dass das Vorhandensein des Treibmittels für das Ergebnis des Schnelltestverfahrens keinen Unterschied macht. Demzufolge kann das Schnelltestverfahren auch ohne Treibmittel an Näpfchen, Ventiltellern oder Blechabschnitten anstelle von befüllten Monoblockdosen als Prüflinge durchgeführt werden. Die Durchführung des Schnelltestverfahrens lässt sich dadurch weiter vereinfachen.

Auch die Ergebnisse der zweiten Variante des Schnelltests, welche ebenfalls weitgehend mit den Ergebnissen der konventionellen Packtests übereinstimmen, zeigen erneut, dass die Haftungsbeständigkeit der Polyolefin enthaltenden Beschichtung des erfindungsgemäßen Aluminiumlegierungsbands ausreichend hoch für die Herstellung von Verpackungsbehältnissen oder Teilen davon für Füllgüter aus dem Bereich Kosmetik und Körperpflege ist. Ferner kann aufgrund dieser Ergebnisse auch von einer ausreichend hohen Haftungsbeständigkeit bei Füllgütern aus den Bereichen Lebensmittel und Haushalt oder bei technischen Füllgütern ausgegangen werden, da diese ähnliche chemische Eigenschaften aufweisen. Entsprechende Versuche mittels der hier beschriebenen zweiten Variante des Schnelltestverfahrens hätten ebenso auch mit solchen Füllgütern durchgeführt werden können.

## Patentansprüche

1. Aluminiumlegierungsband zur Herstellung eines Verpackungsbehältnisses oder eines Teils eines Verpackungsbehältnisses, wobei das Aluminiumlegierungsband eine Aluminiumlegierung des Typs AA3xxx oder AA5xxx aufweist,
**dadurch gekennzeichnet, dass**
das Aluminiumlegierungsband auf einer Seite oder auf beiden Seiten eine Beschichtung aufweist, welche Polyolefin enthält,
wobei die Beschichtung bei Durchführung des beschleunigten zyklischen elektrochemischen Verfahrens gemäß EN ISO 17463 nach sechs Zyklen eine Impedanz von mindestens 40 kΩ bei einer Frequenz von 0,1 Hz aufweist, wobei das beschleunigte zyklische elektrochemische Verfahren in einer Versuchslösung mit einem pH-Wert von 12 durchgeführt wird.

2. Aluminiumlegierungsband nach Anspruch 1,
**dadurch gekennzeichnet, dass**
das Polyolefin zumindest teilweise durch ein Hydroxyalkylamid, insbesondere durch N,N,N',N'-Tetrakis(2-hydroxyethyl)adipamid, vernetzt ist.

3. Aluminiumlegierungsband nach Anspruch 1 oder 2,
**dadurch gekennzeichnet, dass**
die Beschichtung Wachs enthält.

4. Aluminiumlegierungsband nach einem der Ansprüche 1 bis 3,
**dadurch gekennzeichnet, dass**
die Beschichtung ein Flächengewicht von 1,0 g/m² bis 20,0 g/m², bevorzugt 1,5 g/m² bis 14,0 g/m², besonders bevorzugt 2,0 g/m² bis 5,0 g/m² oder 8,0 g/m² bis 13,0 g/m², am meisten bevorzugt 2,5 g/m² bis 4,5 g/m² oder 8,5 g/m² bis 12,5 g/m², aufweist.

5. Aluminiumlegierungsband nach einem der Ansprüche 1 bis 4,
**dadurch gekennzeichnet, dass**
eine beschichtete Seite des Aluminiumlegierungsbands in einer Schlagfalt-Prüfung eine Korrosionslinie von maximal 20 mm, bevorzugt maximal 15 mm, besonders bevorzugt maximal 12 mm, aufweist.

6. Aluminiumlegierungsband nach einem der Ansprüche 1 bis 5,
**dadurch gekennzeichnet, dass**
die Beschichtung einen Gleitreibungskoeffizienten µ_{D} von maximal 0,1, bevorzugt maximal 0,09, besonders bevorzugt maximal 0,08, aufweist.

7. Aluminiumlegierungsband nach einem der Ansprüche 1 bis 6,
**dadurch gekennzeichnet, dass**
die Beschichtung im Vernetzungstest nach ASTM D4752 mindestens 100 Doppelhüben standhält.

8. Aluminiumlegierungsband nach einem der Ansprüche 1 bis 7,
**dadurch gekennzeichnet, dass**
kein Haftungsverlust der Beschichtung auftritt, wenn das Aluminiumlegierungsband einem Schnelltestverfahren unterzogen wird, in dem eine beschichtete Seite eines aus dem Aluminiumlegierungsband hergestellten Prüflings bei einer Temperatur von 60 °C bis 110 °C, vorzugsweise 75 °C bis 95 °C, für eine Dauer von 18 h bis 30 h, vorzugsweise 22 h bis 26 h, mit einem Testmedium in Kontakt gebracht wird, wobei das Testmedium ein Kosmetikprodukt, ein Körperpflegemittel, ein Lebensmittel, ein Haushaltsprodukt oder ein technisches Füllgut ist.

9. Aluminiumlegierungsband nach einem der Ansprüche 1 bis 8,
**dadurch gekennzeichnet, dass**
die Beschichtung bei Durchführung des beschleunigten zyklischen elektrochemischen Verfahrens gemäß EN ISO 17463 nach sechs Zyklen eine Impedanz von mindestens 0,20 MΩ bei einer Frequenz von 0,1 Hz aufweist, wobei das beschleunigte zyklische elektrochemische Verfahren in einer Versuchslösung mit einem pH-Wert zwischen 3,5 und 8,5 durchgeführt wird.

10. Aluminiumlegierungsband nach einem der Ansprüche 1 bis 9,
**dadurch gekennzeichnet, dass**
das Aluminiumlegierungsband eine Metalldicke von 0,1 mm bis 0,7 mm, bevorzugt von 0,3 mm bis 0,5 mm, besonders bevorzugt von 0,35 mm bis 0,45 mm, aufweist.

11. Aluminiumlegierungsband nach einem der Ansprüche 1 bis 10,
**dadurch gekennzeichnet, dass**
das Aluminiumlegierungsband auf einer Seite oder auf beiden Seiten zusätzlich eine chromfreie Konversionsschicht, welche vorzugsweise Zirkoniumphosphat enthält, aufweist.

12. Verfahren zur Herstellung eines Aluminiumlegierungsbands, insbesondere zur Herstellung eines Aluminiumlegierungsbands nach einem der Ansprüche 1 bis 11, wobei das Verfahren umfasst:
- Gießen eines Walzbarrens oder eines Gießbands aus einer Aluminiumlegierung des Typs AA3xxx oder AA5xxx;
- Homogenisieren des Walzbarrens oder des Gießbands;
- Warmwalzen des Walzbarrens oder des Gießbands zu einem Warmband;
- Kaltwalzen des Warmbands an Enddicke mit mindestens einer Zwischenglühung oder ohne Zwischenglühung;
**dadurch gekennzeichnet, dass**
das Verfahren ferner umfasst:
- Erzeugen einer Beschichtung auf einer Seite oder auf beiden Seiten des an Enddicke kaltgewalzten Aluminiumlegierungsbands, wobei die Beschichtung Polyolefin enthält.

13. Verwendung eines Aluminiumlegierungsbands nach einem der Ansprüche 1 bis 11 zur Herstellung eines Verpackungsbehältnisses oder eines Teils eines Verpackungsbehältnisses.

14. Teil eines Verpackungsbehältnisses,
**dadurch gekennzeichnet, dass**
das Teil eines Verpackungsbehältnis aus einem Aluminiumlegierungsband nach einem der Ansprüche 1 bis 11 hergestellt ist.

15. Verpackungsbehältnis,
**dadurch gekennzeichnet, dass**
das Verpackungsbehältnis aus einem Aluminiumlegierungsband nach einem der Ansprüche 1 bis 11 hergestellt ist oder zumindest ein Teil umfasst, welches aus einem Aluminiumlegierungsband nach einem der Ansprüche 1 bis 11 hergestellt ist.
